# FASCICULE DE BREVET EUROPEEN

(11) **EP 3 999 558 B1**
(45) Date de publication et mention de la délivrance du brevet: **22.11.2023**
(21) Numéro de dépôt: 20750344.2
(22) Date de dépôt: 09.07.2020
(51) Int. Cl.: C09J 4/06, C08F 222/14, C08F 290/06, C08G 18/10, C08G 18/28, C08G 18/69, C08G 18/63, C08G 18/67, C08G 18/50, C08G 18/32, C09J 151/08, C09J 175/04, C09J 175/16, C08F 220/14, C08F 220/20

(54) **COMPOSITION ADHÉSIVE BI-COMPOSANTE COMPRENANT UN COMPLEXE BORANE-AMINE**
ZWEIKOMPONENTEN-KLEBSTOFFZUSAMMENSETZUNG, DIE EINEN BORAN-AMIN-KOMPLEX ENTHÄLT
TWO-COMPONENT ADHESIVE COMPOSITION COMPRISING A BORANE-AMINE COMPLEX

(30) Priorité: 18.07.2019 FR 1908161
(43) Date de publication de la demande: 25.05.2022
(73) Titulaire: Bostik SA, 92700 Colombes (FR); Centre national de la recherche scientifique, 75016 Paris (FR); Université de Bordeaux, 33000 Bordeaux (FR); Institut Polytechnique de Bordeaux, 33402 Talence Cedex (FR)
(72) Inventeur: MICHAUD, Guillaume, 60280 Venette (FR); COLIN, Boris, 60280 Venette (FR); SIMON, Frédéric, 60280 Venette (FR); FOUQUAY, Stéphane, 60280 Venette (FR); LIAUTARD, Virginie, 33405 Talence Cedex (FR); PUCHEAULT, Mathieu, 33405 Talence Cedex (FR)
(74) Mandataire: Arkema Patent
(86) Numéro de dépôt international: PCT/FR2020/051238
(87) Numéro de publication internationale: WO 2021/009447

(56) Documents cités:
- US-A1- 2004 198 935
- US-A1- 2009 247 720
- US-A1- 2019 211 229

## Description

### Domaine de l'invention

La présente invention concerne une composition bi-composante ainsi que les utilisations de ladite composition. L'invention concerne également des articles fabriqués avec cette composition et les procédés de préparation desdits articles.

### Arrière-Plan technique

La nature de la surface d'un substrat peut être caractérisée par son énergie de surface. Les substrats de basse énergie de surface, tels que les polyoléfines (polyéthylène, polypropylène polybutène, polyisoprène, polybutadiène, polyfarnésène, polymyrcène, polydicyclopentadiene et leurs copolymères), polyfluorure de vinyle (PVF), polyfluorure de vinylidène (PVDF), polytétrafluoroéthylène (PTFE), sont connus pour être difficiles à coller entre eux ou avec d'autres types de substrats et nécessitent souvent un traitement de la surface avant le collage. Ce traitement peut être aussi nécessaire dans le cas où le substrat doit être revêtu ou traité avec une couche. Cela est dû au fait que la surface du substrat est chimiquement inerte en raison des liaisons carbone-carbone saturées. Ces traitements, tels qu'un traitement plasma ou corona, une abrasion ou un traitement avec un agent chimique, consistent à modifier chimiquement et/ou physiquement la surface du substrat pour modifier favorablement son énergie de surface.

Cependant, ce type de traitement présente un certain nombre de désavantages comme un coût de procédé élevé, des résultats pas forcément reproductibles, ainsi qu'un effet qui s'atténue avec le temps.

Récemment, il a été découvert que l'utilisation des compositions adhésives comprenant des organoboranes permet d'améliorer l'adhésion des composés pouvant être polymérisés par voie radicalaire sur des surfaces de basse énergie. Toutefois, en raison de la nature instable et pyrophorique des organoboranes, ces derniers doivent être complexés avec une amine de sorte à éviter une décomposition oxydative. Ce type de composition est souvent sous la forme de deux parties (une des deux parties comprenant le complexe organoborane-amine et une comprenant un agent réactif avec le complexe organoborane-amine tel qu'un agent décomplexant) mélangées juste avant l'utilisation et l'application de la composition.

Le document US 2,973,337 décrit la polymérisation des composés insaturés comprenant une ou plusieurs liaisons éthyléniques, en utilisant des catalyseurs de type borazane.

Le document US 8,202,932 concerne des compositions (méth)acryliques polymérisables et des systèmes adhésifs préparés à partir de ces compositions. Ces compositions comprennent un borohydrure alkylé ou un métal ou un sel d'ammonium de tétra-alkyle borane et un aminosilane. Selon ce document, ces compositions sont adaptées à des applications de collage concernant au moins une surface de basse énergie.

Le document US 6,632,908 concerne des compositions (méth)acryliques utilisées pour l'adhésion de substrats métalliques, plastiques ou en verre sur des substrats de la même nature ou de nature différente tels que des substrats ayant une surface de basse énergie. Les compositions (méth)acryliques décrites dans ce document comprennent un composé (méth)acrylate et un système initiateur comprenant un composé organométallique, un composé peroxyde, un composé à base d'aziridine et un composé ayant une fonction acide.

Le document US 9,315,701 décrit une composition adhésive en deux parties comprenant un complexe organoborane-amine, une polyamine, un composé polymérisable par voie radicalaire et un composé polyisocyanate. Le document US 2004/198935 décrit une composition en deux parties comprenant dans une partie un complexe organoborane-amine et dans une seconde partie un isocyanate. Ces compositions sont particulièrement adaptées pour l'adhésion des substrats ayant une basse énergie de surface.

Le document WO 2016/077166 concerne une composition en deux parties comprenant une première partie comprenant un complexe organoborane-amine et un diluant réactif, et une deuxième partie comprenant un agent décomplexant pour décomplexer le complexe organoborane-amine, et au moins un composé polymérisable comprenant une liaison insaturée éthylénique.

Cependant, dans certains cas et malgré la complexation de l'organoborane avec l'amine, les compositions adhésives à base de monomères réactifs peuvent s'avérer instables en présence de complexes organoborane-amine et provoquer des problèmes non seulement pour la conservation de celles-ci mais aussi lors de leur utilisation. De plus, les complexes organoborane-amine étant hautement réactifs, cela ne permet pas de contrôler efficacement leur réactivité lors de la réticulation des compositions adhésives (en d'autres termes leur réticulation est très rapide).

Il existe donc un réel besoin de fournir une composition permettant une adhésion satisfaisante, notamment sur et entre des substrats ayant une basse énergie de surface, la composition pouvant être conservée de manière prolongée, utilisée avec sécurité et ayant une réactivité contrôlable.

### Résumé de l'invention

L'invention concerne en premier lieu une composition bi-composante comprenant :
- une partie A comprenant un complexe de borane BH3 avec une amine;
- une partie B comprenant un agent décomplexant pour décomplexer le borane et l'amine ; et
au moins un composé polymérisable par voie radicalaire comprenant au moins une liaison éthylénique, ce composé étant présent dans au moins une des parties A et B.

Dans certains modes de réalisation :
- l'amine est de formule (I) : 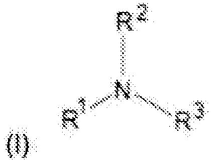 dans laquelle R¹, R² et R³ représentent indépendamment un atome d'hydrogène ou un groupement comprenant de 1 à 20 atomes de carbone, le groupement étant linéaire ou ramifié, saturé ou insaturé, et étant choisi parmi un groupement alkyle, un groupement cycloalkyle, ou un groupement aryle ;
- ou l'amine est de formule (II) : 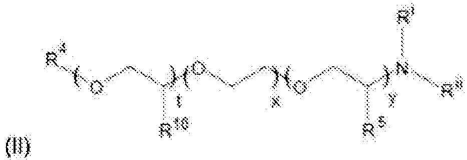 dans laquelle R⁴, R⁵ et R¹⁰ représentent indépendamment un atome d'hydrogène et un groupement comprenant de 1 à 10 atomes de carbone, le groupement étant linéaire ou ramifié, saturé ou insaturé et étant choisi parmi un groupement alkyle, un groupement cycloalkyle, ou un groupement aryle, Rⁱ et Rⁱⁱ représentent indépendamment un atome d'hydrogène ou un groupement comprenant de 1 à 20 atomes de carbone, le groupement étant linéaire ou ramifié, saturé ou insaturé, et étant choisi parmi un groupement alkyle, un groupement cycloalkyle, un groupement aryle, ou un groupement arylalkyle et t, x et y représentent indépendamment un nombre de 0 à 90, préférentiellement de 0 à 70, préférentiellement de 0 à 50 et encore plus préférentiellement de 0 à 30 ;
- ou l'amine est de formule (III) : 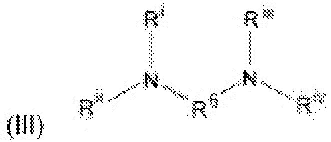 dans laquelle R⁶ représente un groupement divalent comprenant de 2 à 60 atomes de carbone, et de préférence de 2 à 40 atomes de carbone, le groupement étant linéaire ou ramifié, saturé ou insaturé, et étant choisi parmi un radical divalent alkyle, un radical divalent cycloalkyle, un radical divalent arylalkyle, ou un radical divalent aryle, et Rⁱ, Rⁱⁱ, Rⁱⁱⁱ et R^{iv} représentent indépendamment un atome d'hydrogène ou un groupement comprenant de 1 à 20 atomes de carbone, le groupement étant linéaire ou ramifié, saturé ou insaturé, et étant choisi parmi un groupement alkyle, un groupement cycloalkyle, un groupement aryle ou un groupement arylalkyle ;
- ou l'amine est de formule (IV) : 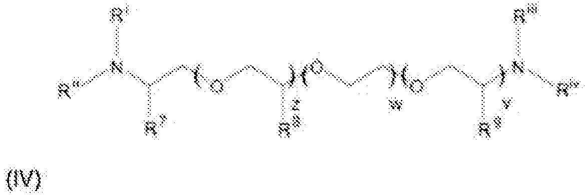 dans laquelle R⁷ R⁸ et R⁹ représentent indépendamment un groupement comprenant de 1 à 10 atomes de carbone, le groupement étant linéaire ou ramifié, saturé ou insaturé, et étant choisi parmi un groupement alkyle, un groupement cycloalkyle, ou un groupement aryle, Rⁱ, Rⁱⁱ, Rⁱⁱⁱ et R^{iv} représentent indépendamment un atome d'hydrogène ou un groupement comprenant de 1 à 20 atomes de carbone, le groupement étant linéaire ou ramifié, saturé ou insaturé, et étant choisi parmi un groupement alkyle, un groupement cycloalkyle, un groupement aryle, ou un groupement arylalkyle et v, w et z représentent indépendamment un nombre de 0 à 90 et encore plus préférentiellement de 0 à 70 ;
- ou l'amine est de formule (V) : 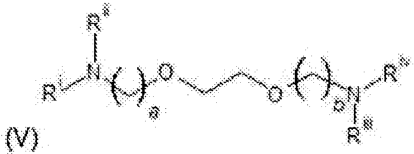 dans laquelle Rⁱ, Rⁱⁱ, Rⁱⁱⁱ et R^{iv} représentent indépendamment un atome d'hydrogène ou un groupement comprenant de 1 à 20 atomes de carbone, le groupement étant linéaire ou ramifié, saturé ou insaturé, et étant choisi parmi un groupement alkyle, un groupement cycloalkyle, un groupement aryle, ou un groupement arylalkyle ; a et b représentent indépendamment un nombre de 1 à 20 et de préférence de 2 à 11 ;
- ou l'amine est de formule (VI) : 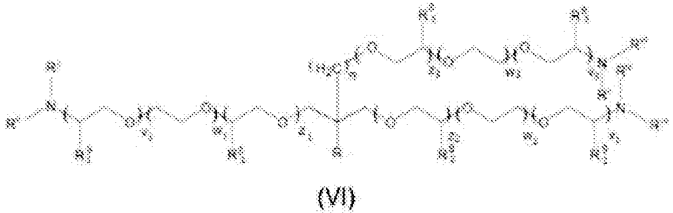 dans laquelle R₁⁸, R₁⁹, R₂⁸, R₂⁹, R₂⁹, R₃⁸, et R₃⁹ représentent indépendamment un groupement comprenant de 1 à 10 atomes de carbone, le groupement étant linéaire ou ramifié et étant choisi parmi un groupement alkyle, un groupement cycloalkyle, ou un groupement aryle, R représente un atome d'hydrogène et un groupement comprenant de 1 à 10 atomes de carbone le groupement étant linéaire ou ramifié et étant choisi parmi un groupement alkyle, un groupement cycloalkyle, un groupement arylalkyle, ou un groupement aryle, Rⁱ, Rⁱⁱ, Rⁱⁱⁱ et R^{iv} représentent indépendamment un atome d'hydrogène ou un groupement comprenant de 1 à 20 atomes de carbone, le groupement étant linéaire ou ramifié, saturé ou insaturé, et étant choisi parmi un groupement alkyle, un groupement cycloalkyle, un groupement aryle, ou un groupement arylalkyle n représente un nombre de 0 à 30 et de préférence est égal à 0 ou 1 et les sommes z₁ + z₂ + z₃, v₁+ v₂ + v₃ et w₁ + w₂ + w₃ représentent indépendamment un nombre de 0 à 90, préférentiellement de 0 à 70, préférentiellement de 0 à 50 et encore plus préférentiellement de 0 à 30.

Dans certains modes de réalisation, l'amine est choisie parmi la diéthylamine, la triéthylamine, la diéthylaniline, la diisopropylamine, la diisopropylethylamine, la tetraméthylpiperidine, la tert butylamine, l'éthylènediamine, la 1,3-propanediamine, une polyétheramine, et les combinaisons de celles-ci.

Dans certains modes de réalisation, l'agent décomplexant est choisi parmi un isocyanate, un acide de Lewis, un acide carboxylique, un acide minéral, un acide sulfonique, un acide phosphonique, un chlorure d'acyle, un anhydride, un aldéhyde, un composé 1,3 dicarbonylé, un époxyde et les combinaisons de ceux-ci, et de préférence l'agent décomplexant est un isocyanate.

Dans certains modes de réalisation, le composé polymérisable par voie radicalaire est choisi parmi un monomère styrénique, vinylique, acrylique, méthacrylique et les combinaisons de ceux-ci.

Dans certains modes de réalisation, le composé polymérisable par voie radicalaire est un monomère choisi parmi un acrylate, un acide acrylique, un acrylamide, un acrylonitrile, un méthacrylate, un acide méthacrylique, un méthacrylamide, un méthacrylonitrile et les combinaisons de ceux-ci.

Dans certains modes de réalisation, le composé polymérisable par voie radicalaire est présent uniquement dans la partie B de la composition.

Dans certains modes de réalisation, le composé polymérisable par voie radicalaire est présent uniquement dans la partie A de la composition.

Dans certains modes de réalisation, le composé polymérisable par voie radicalaire est présent dans la partie A et dans la partie B de la composition.

Dans certains modes de réalisation, le composé polymérisable par voie radicalaire a une teneur massique de 10 à 70 %, et de préférence de 10 à 60 % par rapport au total des parties A et B de la composition.

Dans certains modes de réalisation, le rapport massique de la partie A sur la partie B est de 0,05 à 20, de préférence de 0,1 à 10, et encore de préférence de 0,1 à 1.

Dans certains modes de réalisation, le complexe de borane BH₃ avec une amine est présent dans la partie A à une teneur massique de 0,1 à 100 %, de préférence de 1 à 50 %, et encore de préférence de 1 à 25 % par rapport au total de la partie A.

Dans certains modes de réalisation, l'agent décomplexant est présent dans la partie B à une teneur massique de 0,1 à 70 %, et de préférence de 5 à 60 % par rapport au total de la partie B.

Dans certains modes de réalisation, la composition comprend en outre au moins une amine additionnelle choisie parmi une monoamine ou une polyamine, de préférence à une teneur massique de 0,01 à 30 %.

Dans certains modes de réalisation, la composition comprend en outre un ou plusieurs additifs choisis parmi les charges, les plastifiants, les résines tackifiantes, les solvants, les stabilisants UV, les absorbeurs d'humidités, les matériaux fluorescents, les additifs rhéologiques et leurs combinaisons.

L'invention concerne également l'utilisation de la composition telle que décrite ci-dessus, comme adhésif pour lier deux substrats entre eux.

L'invention concerne également l'utilisation de la composition telle que décrite ci-dessus, comme revêtement sur la surface d'un substrat.

L'invention concerne également l'utilisation de la composition telle que décrite ci-dessus, comme primaire sur la surface d'un substrat.

Dans certains modes de réalisation, le substrat ou au moins l'un des deux substrats a une énergie de surface inférieure ou égale à 45 mJ/m², de préférence inférieure ou égale à 40 mJ/m², et encore de préférence inférieure ou égale à 35 mJ/m².

Dans certains modes de réalisation, le substrat ou au moins l'un des deux substrats est constitué de polyoléfine(s), de préférence choisie(s) parmi le polyéthylène, le polypropylène, le polybutène, le polyisoprène, le polybutadiène, le polyfarnesene, le polymyrcène, le polyfluorure de vinyle, le poly(fluorure de vinylidène), le polydifluorure de vinyle, le polytrifluorure de vinyle le polytétrafluoroéthylène, ainsi que leurs copolymères ou leurs mélanges.

L'invention concerne également un article comprenant au moins une couche obtenue par réticulation de la composition telle que décrite ci-dessus.

Dans certains modes de réalisation, la couche est une couche adhésive.

L'invention concerne également un procédé de préparation de l'article décrit ci-dessus, comprenant :
- le mélange de la partie A avec la partie B de la composition ; et
- l'enduction de ce mélange sur la surface d'un substrat ;
- optionnellement la mise en contact de cette surface avec la surface d'un substrat additionnel.

La présente invention permet de répondre au besoin exprimé ci dessus. Elle fournit plus particulièrement une composition permettant une adhésion satisfaisante, notamment sur et entre des substrats ayant une basse énergie de surface, la composition pouvant être conservée de manière prolongée, utilisée avec sécurité et ayant une réactivité contrôlable.

Cela est accompli grâce à l'utilisation d'une composition bi composante (ou kit) comprenant un complexe de borane-amine (soit BH₃-amine). Le complexe borane-amine offre une stabilité améliorée à la composition, par exemple par rapport aux complexes comprenant des organoboranes, ce qui permet sa conservation prolongée. De plus, ces complexes étant plus stables que les complexes organoborane-amine, les complexes borane-amine permettent de mieux contrôler la réactivité de la composition lors de sa réticulation.

La possibilité d'utiliser un tel complexe de manière satisfaisante constitue une réelle surprise, dans la mesure où le mécanisme de polymérisation initié par un tel complexe est nécessairement différent de celui initié par un complexe organoborane tel qu'employé dans l'état de la technique.

Plus particulièrement, une première partie de la composition (partie A) comprend ce complexe borane-amine alors qu'une deuxième partie de la composition (partie B) comprend un agent décomplexant pour décomplexer le borane et l'amine et libérer le borane qui initiera la polymérisation. Ainsi, la composition comprend au moins un composé polymérisable par voie radicalaire comprenant au moins une liaison éthylénique, ce qui permet sa polymérisation sur le substrat en créant des liaisons covalentes entre le polymère et le substrat.

La stabilité améliorée du complexe borane-amine permet la présence du composé polymérisable par voie radicalaire dans la partie A de la composition, sans présenter de risque pour la sécurité ou la conservation de la composition.

### Description détaillée

L'invention est maintenant décrite plus en détail et de façon non limitative dans la description qui suit.

L'invention concerne une composition bi-composante comprenant une première partie (partie A) et une deuxième partie (partie B).

### Complexe borane-amine

La composition bi-composante, et plus particulièrement la partie A de la composition bi-composante comprend un complexe de borane avec une amine.

Par « borane » ou « trihydridobore » selon la nomenclature systématique, on entend une molécule ayant la formule « BH₃ ».

Etant donné que le borane est une molécule hautement réactive, sa complexation avec une amine est nécessaire afin d'assurer une bonne stabilité au stockage de la partie A de la composition adhésive.

L'amine peut être une monoamine (comprenant un seul groupement aminé) ou une polyamine (comprenant plus qu'un groupement aminé, par exemple deux, trois ou quatre groupements aminés). Dans le cas des polyamines présentant une chaîne principale, les groupements aminés peuvent être présents aux extrémités de la chaîne principale et/ou sous la forme de groupements latéraux ou pendants le long de la chaîne principale.

De préférence, l'amine est une monoamine.

Lorsque l'amine est une monoamine, elle peut être choisie parmi une monoamine primaire, secondaire ou tertiaire.

Selon certains modes de réalisation, la monoamine peut être de formule (I) :

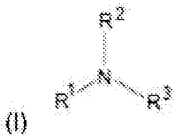

R¹, R² et R³ peuvent représenter indépendamment un atome d'hydrogène ou un groupement comprenant de 1 à 20 atomes de carbone. Ce groupement peut être linéaire ou ramifié, saturé ou insaturé.

Selon certains modes de réalisation, R¹, R² et R³ peuvent indépendamment être choisis parmi un groupement alkyle, un groupement cycloalkyle, ou un groupement aryle. A titre d'exemple, R¹, R² et R³ peuvent indépendamment être un groupement méthyle, un groupement éthyle, un groupement n-propyle, un groupement isopropyle, un groupement cyclopropyle, un groupement tert-butyle, un groupement isobutyle, un groupement n-butyle, un groupement sec-butyle, un groupement cyclobutyle, un groupement cyclopentyle, un groupement cyclohexyle, un groupement alkyle substitué par un groupement aryle (arylalkyle) tel qu'un alkyle phényle, un groupement phényle substitué ou non par un ou plusieurs groupements tels qu'un groupement alkyle (alkylaryle) ou cycloalkyle, un groupement alkoxy, un halogène, un groupement nitro, et un groupement carbonyle, un groupement naphthyle substitué ou non par un ou plusieurs groupements tels qu'un groupement alkyle ou cycloalkyle, un groupement alkoxy, un halogène, un groupement nitro, et un groupement carbonyle, un groupement hétéroaryle substitué ou non par un ou plusieurs groupements tels qu'un groupement alkyle ou cycloalkyle, un groupement alkoxy, un halogène, un groupement nitro, et un groupement carbonyle. Comme exemples de groupements hétéroaryles on peut citer les pyridines, les pyrroles et les carbazoles. Alternativement, deux des R¹, R² et R³ peuvent faire partie d'un cycle, par exemple d'une pyrrolidine, d'une pipéridine, d'une morpholine, d'une thiomorpholine, ou d'un de leurs homologues supérieurs. Encore alternativement, deux des R¹, R² et R³ peuvent faire partie de plusieurs cycles tel que par exemple le 1 azabicyclo[2.2.2]octane (ou quinuclidine).

Selon certains modes de réalisation, R¹, R² et R³ peuvent être identiques.

Selon d'autres modes de réalisation, R¹, R² et R³ peuvent être différents l'un de l'autre.

Selon certains modes de réalisation, au moins deux des R¹, R² et R³ sont identiques.

Selon certains modes de réalisation, au moins un des R¹, R² et R³ est un hydrogène.

Selon d'autres modes de réalisation, aucun des R¹, R² et R³ n'est un hydrogène.

Selon des modes de réalisation préférés, lorsque la monoamine de formule (I) est une amine primaire, il peut s'agir de la tert butylamine.

Selon des modes de réalisation préférés, lorsque la monoamine de formule (I) est une amine secondaire, il peut s'agir de la diisopropylamine ou de la diéthylamine, et de préférence de la diisopropylamine.

Selon des modes de réalisation préférés, lorsque la monoamine de formule (I) est une amine tertiaire, il peut s'agir de la triéthylamine, la diisopropyléthylamine ou de la diéthylaniline.

Selon d'autres modes de réalisation, la monoamine peut être une polyétheramine, c'est-à-dire une amine comprenant plusieurs fonctions éther.

Selon des modes de réalisation préférés, la monoamine est une polyétheramine primaire.

Selon d'autres modes de réalisation, la monoamine est une polyétheramine secondaire ou tertiaire.

Ainsi, dans le cas où il s'agit d'une monoamine qui est une polyétheramine, elle peut être de formule (II) :

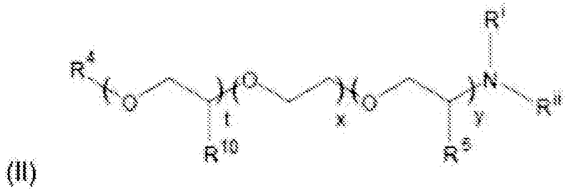

R⁴, R⁵ et R¹⁰ peuvent représenter indépendamment un atome d'hydrogène et un groupement comprenant de 1 à 10 atomes de carbone. Ce groupement peut être linéaire ou ramifié, saturé ou insaturé. De préférence, R⁴, R⁵ et R¹⁰ représentent indépendamment un groupement comprenant de 1 à 10 atomes de carbone, de préférence de 1 à 7 et encore de préférence de 1 à 3 atomes de carbone linéaire ou ramifié.

Selon certains modes de réalisation R⁴ peut être choisi parmi un groupement alkyle, un groupement cycloalkyle, un groupement arylalkyle un groupement aryle, ou un groupement alkylaryle, les groupements alkyle, cycloalkyle, arylakyle, aryle et alkylaryle étant comme décrits ci-dessus.

De préférence, R⁴ est un groupement alkyle, de préférence comprenant de 1 à 7 atomes de carbone, et de préférence de 1 à 3 atomes de carbone.

Selon certains modes de réalisation, R⁵ peut être choisi parmi un groupement alkyle, un groupement cycloalkyle, ou un groupement aryle, ces groupements étant comme décrits ci-dessus. De préférence, R⁵ est un groupement alkyle, de préférence comprenant de 1 à 2 atomes de carbone. Encore de préférence, R⁵ est choisi parmi un groupement méthyle et un groupement éthyle.

Selon certains modes de réalisation R¹⁰ peut être choisi parmi un groupement alkyle, un groupement cycloalkyle, ou un groupement aryle, les groupements alkyle, cycloalkyle et aryle étant comme décrits ci-dessus. De préférence, R¹⁰ est un groupement alkyle, de préférence comprenant de 1 à 2 atomes de carbone. Encore de préférence R¹⁰ est choisi parmi un groupement méthyle et un groupement éthyle.

Selon certains modes de réalisation préférés, R⁴, R⁵ et R¹⁰ peuvent être identiques.

Selon d'autres modes de réalisation, R⁴, R⁵ et R¹⁰ peuvent être différents l'un de l'autre.

Selon des modes de réalisation préférées, R⁵ et R¹⁰ sont différents l'un de l'autre. Par exemple, un des R⁵ et R¹⁰ peut être un groupement éthyle et l'autre des R⁵ et R¹⁰ peut être un groupement méthyle.

Selon des modes de réalisation préférés, au moins un des R⁴, R⁵ et R¹⁰ est un groupement méthyle.

Rⁱ et Rⁱⁱ peuvent représenter indépendamment un atome d'hydrogène ou un groupement comprenant de 1 à 20 atomes de carbone. Ce groupement peut être linéaire ou ramifié, saturé ou insaturé.

Selon certains modes de réalisation, Rⁱ et Rⁱⁱ peuvent indépendamment être choisis parmi un groupement alkyle, un groupement cycloalkyle, un groupement aryle, ou un groupement arylalkyle. A titre d'exemple, Rⁱ et Rⁱⁱ peuvent indépendamment être un groupement méthyle, un groupement éthyle, un groupement n-propyle, un groupement isopropyle, un groupement cyclopropyle, un groupement tert butyle, un groupement isobutyle, un groupement n-butyle, un groupement sec-butyle, un groupement cyclobutyle, un groupement cyclopentyle, un groupement cyclohexyle, un groupement alkyle substitué par un groupement aryle tel qu'un alkyle phényle, un groupement phényle substitué ou non par un ou plusieurs groupements tels qu'un groupement alkyle ou cycloalkyle, un groupement alkoxy, un halogène, un groupement nitro, et un groupement carbonyle, un groupement naphthyle substitué ou non par un ou plusieurs groupements tels qu'un groupement alkyle ou cycloalkyle, un groupement alkoxy, un halogène, un groupement nitro, et un groupement carbonyle, un groupement hétéroaryle substitué ou non par un ou plusieurs groupements tels qu'un groupement alkyle ou cycloalkyle, un groupement alkoxy, un halogène, un groupement nitro, et un groupement carbonyle. Comme exemples de groupements hétéroaryles on peut citer les pyridines, les pyrroles et les carbazoles. Alternativement, les Rⁱ et Rⁱⁱ peuvent faire partie d'un cycle, par exemple d'une pyrrolidine, d'une pipéridine, d'une morpholine, d'une thiomorpholine, ou d'un de leurs homologues supérieurs.

Selon certains modes de réalisation préférés, Rⁱ et Rⁱⁱ sont tous des atomes d'hydrogène. Dans ce cas, il s'agit d'une polyétheramine primaire.

Selon d'autres modes de réalisation, au moins un des Rⁱ et Rⁱⁱ est un groupement comprenant de 1 à 20 atomes de carbone. Dans ce cas, il s'agit d'une polyétheramine secondaire.

Selon d'autres modes de réalisation, les deux des Rⁱ et Rⁱⁱ sont indépendamment des groupements comprenant de 1 à 20 atomes de carbone. Dans ce cas, il s'agit d'une polyétheramine tertiaire.

Selon certains modes de réalisation t, x et y peuvent représenter indépendamment un nombre de 0 à 90 préférentiellement de 0 à 70, préférentiellement de 0 à 50 et encore plus préférentiellement de 0 à 30. Ainsi, t, x et y peuvent représenter indépendamment un nombre de 0 à 10, ou de 10 à 20 ; ou de 20 à 30 ; ou de 30 à 40 ; ou de 40 à 50 ; ou de 50 à 60 ; ou de 60 à 70 ; ou de 70 à 80 ; ou de 80 à 90.

Quand t est différent de 0, le nombre t représente le nombre de groupements éthoxy substitués par un groupement R¹⁰ (de préférence des groupements propoxy lorsque R¹⁰ est un méthyle ou des groupements butoxy lorsque R¹⁰ est un éthyle) présents dans la monoamine de formule (II).

Le nombre t peut être un nombre entier ou non. Par exemple, si un mélange de différents oxydes d'alkylène est utilisé, t correspond au degré moyen d'éthoxylation des groupements éthoxy substitués par un groupement R¹⁰ (de préférence au degré moyen de propoxylation lorsque R¹⁰ est un méthyle ou de butoxylation lorsque R¹⁰ est un éthyle).

Quand x est différent de 0, le nombre x représente le nombre de groupements éthoxy présents dans la monoamine de formule (II).

Le nombre x peut être un nombre entier ou non. Par exemple, si un mélange de différents oxydes d'alkylène est utilisé, x correspond au degré moyen d'éthoxylation.

Quand y est différent de 0, le nombre y représente le nombre de groupements éthoxy substitués par un groupement R⁵ (de préférence des groupements propoxy lorsque R⁵ est un méthyle ou des groupements butoxy lorsque R⁵ est un éthyle) présents dans la monoamine de formule (II).

Le nombre y peut être un nombre entier ou non. Par exemple, si un mélange de différentes oxydes d'alkylène est utilisé, y correspond au degré moyen d'éthoxylation des groupements éthoxy substitués par un groupement R⁵ (de préférence au degré moyen de propoxylation lorsque R⁵ est un méthyle ou de butoxylation lorsque R⁵ est un éthyle).

Lorsque t et y sont différents de 0, la somme t + y représente le nombre de groupements éthoxy substitués par les groupements R⁵ et R¹⁰ (de préférence des groupements propoxy lorsque R⁵ et R¹⁰ sont des méthyles ou des groupements butoxy lorsque R⁵ et R¹⁰ sont des éthyles) présents dans l'amine de formule (II).

Selon certains modes de réalisation, lorsque t est égal à 0, y est différent de 0.

Selon d'autres modes de réalisation, lorsque y est égal à 0, t est différent de 0.

Selon encore d'autres modes de réalisation, notamment lorsque R⁵ et R¹⁰ sont différents, t et y sont tous les deux différents de 0.

Selon certains modes de réalisation, lorsque y et/ou t est égal à 0, x est différent de 0.

Selon d'autres modes de réalisation, lorsque x est égal à 0, y et/ou t est différent de 0.

Les monoamines de formule (II) peuvent avoir une masse moléculaire de 200 à 5500 g/mol, et de préférence de 500 à 2500 g/mol. Par exemple, les monoamines de formule (II) peuvent avoir une masse moléculaire de 200 à 500 g/mol ; ou de 500 à 750 g/mol ; ou de 750 à 1000 g/mol ; ou de 1000 à 1250 g/mol ; ou de 1250 à 1500 g/mol ; ou de 1500 à 1750 g/mol ; ou de 1750 à 2000 g/mol ; ou de 2000 à 2250 g/mol ; ou de 2250 à 2500 g/mol ; ou de 2500 à 2750 g/mol ; ou de 2750 à 3000 g/mol ; ou de 3000 à 3250 g/mol ; ou de 3250 à 3500 g/mol ; ou de 3500 à 3750 g/mol ; ou de 3750 à 4000 g/mol ; ou de 4000 à 4250 g/mol ; ou de 4250 à 4500 g/mol ; ou de 4500 à 4750 g/mol ; ou de 4750 à 5000 g/mol ; ou de 5000 à 5250 g/mol ; ou de 5250 à 5500 g/mol.

Ce type de polyétheramines est par exemple commercialisé sous le nom « Jeffamine serie M » par la société Huntsman.

Lorsque l'amine est une polyamine, elle peut être choisie parmi une polyamine primaire et/ou secondaire et/ou tertiaire. De préférence, il s'agit d'une polyamine primaire, c'est-à-dire que tous ses groupements aminés sont primaires. Encore de préférence il s'agit d'une diamine. Toutefois, des polyamines comprenant plus que deux groupements aminés (par exemple trois ou quatre) telles que les polyéthylène imines (PEI) peuvent être utilisées.

Selon certains modes de réalisation, la polyamine peut être de formule (III) :

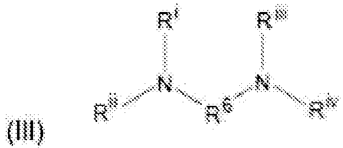

R⁶ peut représenter un groupement divalent comprenant de 2 à 60 atomes de carbone, de préférence de 2 à 40 atomes de carbones et de préférence encore de 2 à 15 atomes de carbone.

R⁶ peut être linéaire ou ramifié, cyclique ou alicyclique, saturé ou insaturé.

R⁶ peut comprendre un ou plusieurs hétéroatomes tels qu'un atome d'oxygène, un atome de soufre, un atome d'azote ou un halogène. De préférence un seul hétéroatome peut être compris dans R⁶.

De plus, R⁶ peut être choisi parmi un radical divalent alkyle, un radical divalent cycloalkyle, un radical divalent alicyclique, un radical divalent arylalkyle ou un radical divalent aryle. De préférence, R⁶ est un groupement alkyle.

Rⁱ et Rⁱⁱ sont comme détaillés ci-dessus.

Rⁱⁱⁱ et R^{iv} peuvent représenter indépendamment un atome d'hydrogène ou un groupement comprenant de 1 à 20 atomes de carbone. Ce groupement peut être linéaire ou ramifié, saturé ou insaturé.

Selon certains modes de réalisation, Rⁱⁱⁱ et R^{iv} peuvent indépendamment être choisis parmi un groupement alkyle, un groupement cycloalkyle, un groupement aryle, ou un groupement arylalkyle. A titre d'exemple, Rⁱⁱⁱ et R^{iv} peuvent indépendamment être un groupement méthyle, un groupement éthyle, un groupement n-propyle, un groupement isopropyle, un groupement cyclopropyle, un groupement tert-butyle, un groupement isobutyle, un groupement n-butyle, un groupement sec-butyle, un groupement cyclobutyle, un groupement cyclopentyle, un groupement cyclohexyle, un groupement alkyle substitué par un groupement aryle tel qu'un alkyle phényle, un groupement phényle substitué ou non par un ou plusieurs groupements tels qu'un groupement alkyle ou cycloalkyle, un groupement alkoxy, un halogène, un groupement nitro, et un groupement carbonyle, un groupement naphthyle substitué ou non par un ou plusieurs groupements tels qu'un groupement alkyle ou cycloalkyle, un groupement alkoxy, un halogène, un groupement nitro, et un groupement carbonyle, un groupement hétéroaryle substitué ou non par un ou plusieurs groupements tels qu'un groupement alkyle ou cycloalkyle, un groupement alkoxy, un halogène, un groupement nitro, et un groupement carbonyle. Comme exemples de groupements hétéroaryles on peut citer les pyridines, les pyrroles et les carbazoles. Alternativement, les Rⁱⁱⁱ et R^{iv} peuvent faire partie d'un cycle, par exemple d'une pyrrolidine, d'une pipéridine, d'une morpholine, d'une thiomorpholine, ou d'un de leurs homologues supérieurs

Selon certains modes de réalisation préférés, Rⁱ et Rⁱⁱ et/ou Rⁱⁱⁱ et R^{iv} sont tous des atomes d'hydrogène.

Selon d'autres modes de réalisation, au moins un des Rⁱ et Rⁱⁱ et/ou au moins un des Rⁱⁱⁱ et R^{iv} est un groupement comprenant de 1 à 20 atomes de carbone.

Selon d'autres modes de réalisation, les deux des Rⁱ et Rⁱⁱ et/ou les deux des Rⁱⁱⁱ et R^{iv} sont indépendamment des groupements comprenant de 1 à 20 atomes de carbone.

Selon des modes de réalisation préférés, la polyamine de formule (III) peut être choisi parmi l'éthylènediamine, la 1,3-propanediamine, la 1,5 pentanediamine, la 1,6-hexanediamine, la 1,12-dodecanediamine, la 2 méthyl-1,5-pentanediamine, la 3-méthyl-1,5-pentanediamine, l'isophoronediamine, la 4,4'-méthylènedianiline, la 2-méthylbenzène-1,4-diamine, la diéthylenetriamine, la 4,6-diéthyl-2-méthylbenzene-1,3-diamine, la 4,4'-méthylèndicyclohexanamine, la 2,4,6-triméthyl-1,3-phénylènediamine, la naphthalène-1,8-diamine.

Encore de préférence, la polyamine de formule (III) peut être choisie parmi l'éthylènediamine, et la 1,3-propanediamine, et de préférence la polyamine de formule (III) est la 1,3-propanediamine.

Selon d'autres modes de réalisation, la polyamine peut être une polyétheramine comprenant deux groupements aminés, de préférence primaire. Alternativement, la polyamine peut être une polyamine secondaire ou tertiaire comprenant deux groupements aminés.

Ainsi, lorsqu'il s'agit d'une polyétheramine comprenant deux groupements aminés, elle peut avoir une formule (IV) :

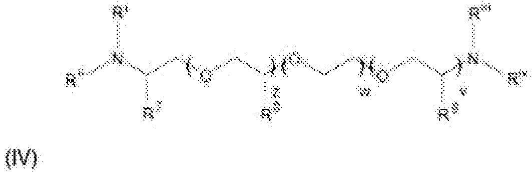

R⁷, R⁸ et R⁹ peuvent représenter indépendamment un groupement comprenant de 1 à 10 atomes de carbone, de préférence de 1 à 6 atomes de carbone, et encore de préférence de 1 à 2 atomes de carbone. Ces groupements peuvent être linéaires ou ramifiés, saturés ou insaturés.

R⁷, R⁸ et R⁹ peuvent indépendamment être choisis parmi un groupement alkyle, un groupement cycloalkyle, ou un groupement aryle, ces groupements étant comme décrits ci-dessus. De préférence, au moins un des R⁷, R⁸ et R⁹ est un groupement alkyle, et encore de préférence un groupement méthyle ou un groupement éthyle.

Selon certains modes de réalisation préférés, R⁷, R⁸ et R⁹ peuvent être identiques.

Selon d'autres modes de réalisation, R⁷, R⁸ et R⁹ peuvent être différents l'un de l'autre.

Selon des modes de réalisation préférés, au moins un des R⁷, R⁸ et R⁹ est un groupement méthyle, et de préférence les R⁷, R⁸ et R⁹ sont des groupements méthyles.

Selon des modes de réalisation préférées, R⁸ et R⁹ sont différents l'un de l'autre.

Selon d'autres modes de réalisation, au moins un des R⁸ et R⁹ sont des groupements méthyle et l'autre des R⁸ et R⁹ des groupements éthyle.

Rⁱ, Rⁱⁱ, Rⁱⁱⁱ et R^{iv} sont tels que détaillés ci-dessus.

Selon certains modes de réalisation préférés, Rⁱ et Rⁱⁱ et/ou Rⁱⁱⁱ et R^{iv} sont tous des atomes d'hydrogène.

Selon d'autres modes de réalisation, au moins un des Rⁱ et Rⁱⁱ et/ou au moins un des Rⁱⁱⁱ et R^{iv} est un groupement comprenant de 1 à 20 atomes de carbone.

Selon d'autres modes de réalisation, les deux des Rⁱ et Rⁱⁱ et/ou les deux des Rⁱⁱⁱ et R^{iv} sont indépendamment des groupements comprenant de 1 à 20 atomes de carbone.

Selon certains modes de réalisation v, w et z peuvent représenter indépendamment un nombre de 0 à 90 préférentiellement de 0 à 70. Ainsi v, w et z peuvent représenter indépendamment un nombre de 0 à 10, ou de 10 à 20 ; ou de 20 à 30 ; ou de 30 à 40 ; ou de 40 à 50 ; ou de 50 à 60 ; ou de 60 à 70 ; ou de 70 à 80 ; ou de 80 à 90.

Selon certains modes de réalisation, z est égal à 0 et v est différent de 0.

Selon d'autres modes de réalisation, z est différent de 0 et v est égal à 0.

Selon encore d'autres réalisation, z et v sont tous les deux différents de 0.

Lorsque z et v sont différents de 0, la somme z + v représente le nombre de groupements éthoxy substitués (de préférence des groupements propoxy ou butoxy) présents dans la polyamine de formule (IV).

La somme z + v peut être un nombre entier ou non. Par exemple, si un mélange de différents oxydes d'alkylène est utilisé, z + v correspond au degré moyen d'éthoxylation des groupements éthoxy substitués par R⁸ et R⁹ (de préférence au degré de propoxylation ou de butoxylation).

Lorsque v est égal à 0, le nombre z représente le nombre de groupements éthoxy substitués par R⁸ (de préférence des groupements propoxy lorsque R⁸ est un méthyle ou des groupements butoxy lorsque R⁸ est un éthyle) présents dans la polyamine de formule (IV).

Lorsque z est égal à 0, le nombre v représente le nombre groupements éthoxy substitués par R⁹ (de préférence des groupements propoxy lorsque R⁹ est un méthyle ou des groupements butoxy lorsque R⁹ est un éthyle) présents dans la polyamine de formule (IV).

Les nombres z et v peuvent être des nombres entiers ou non.

Le nombre w représente le nombre de groupements éthoxy présents dans la polyamine.

Le nombre w peut être un nombre entier ou non. Par exemple, si un mélange de différentes molécules est utilisé, w correspond au degré moyen d'éthoxylation.

Selon certains modes de réalisation, v et w peuvent être 0. Ce type de polyétheramines est par exemple commercialisé sous le nom « Jeffamine serie D » et « Jeffamine serie SD » par la société HUNTSMAN.

Selon d'autres modes de réalisation, w peut être égal à 0, alors que v est supérieur à 0.

Selon d'autres modes de réalisation, v et w peuvent être supérieurs à 0.

Ce type de polyétheramines est par exemple commercialisé sous le nom « Jeffamine serie ED » par la société Huntsman.

Les polyétheramines de formule (IV) peuvent avoir une masse moléculaire de 100 à 5000 g/mol, de préférence de 200 à 4000 g/mol, de préférence 200 à 2000 g/mol et de préférence 200 à 1000 g/mol. Par exemple, les polyétheramines de formule (IV) peuvent avoir une masse moléculaire de 100 à 500 g/mol ; ou de 500 à 750 g/mol ; ou de 750 à 1000 g/mol ; ou de 1000 à 1250 g/mol ; ou de 1250 à 1500 g/mol ; ou de 1500 à 1750 g/mol ; ou de 1750 à 2000 g/mol ; ou de 2000 à 2250 g/mol ; ou de 2250 à 2500 g/mol ; ou de 2500 à 2750 g/mol ; ou de 2750 à 3000 g/mol ; ou de 3000 à 3250 g/mol ; ou de 3250 à 3500 g/mol ; ou de 3500 à 3750 g/mol ; ou de 3750 à 4000 g/mol ; ou de 4000 à 4250 g/mol ; ou de 4250 à 4500 g/mol ; ou de 4500 à 4750 g/mol ; ou de 4750 à 5000 g/mol.

Selon d'autres modes de réalisation, la polyétheramine comprenant deux groupements aminés peut avoir une formule (V) :

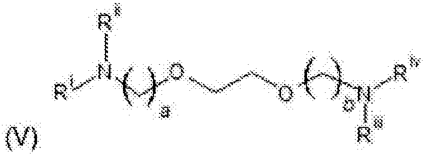

Rⁱ, Rⁱⁱ, Rⁱⁱⁱ et R^{iv} sont tels que décrits ci-dessus.

Selon certains modes de réalisation préférés, Rⁱ et Rⁱⁱ et/ou Rⁱⁱⁱ et R^{iv} sont tous des atomes d'hydrogène.

Selon d'autres modes de réalisation, au moins un des Rⁱ et Rⁱⁱ et/ou au moins un des Rⁱⁱⁱ et R^{iv} est un groupement comprenant de 1 à 20 atomes de carbone.

Selon d'autres modes de réalisation, les deux des Rⁱ et Rⁱⁱ et/ou les deux des Rⁱⁱⁱ et R^{iv} sont indépendamment des groupements comprenant de 1 à 20 atomes de carbone.

Selon certains modes de réalisation, a et b peuvent représenter indépendamment un nombre de 1 à 20 et de préférence de 2 à 11.

Selon certains modes de réalisation préférés, a et b sont identiques. De préférence a et b sont égaux à 2 ou 3.

Selon d'autres modes de réalisation, a et b sont différents. Dans ce cas, ou moins un des a et b est de préférence égal à 2 ou 3.

Les polyétheramines de formule (V) peuvent avoir une masse moléculaire de 150 à 1500 g/mol, de préférence de 150 à 1000 g/mol et de préférence 150 à 500 g/mol. Par exemple, les polyétheramines de formule (V) peuvent avoir une masse moléculaire de 150 à 160 g/mol ; ou de 160 à 170 g/mol ; ou de 170 à 180 g/mol ; ou de 180 à 190 g/mol ; ou de 190 à 200 g/mol ; ou de 200 à 300 g/mol ; ou de 300 à 400 g/mol ; ou de 400 à 500 g/mol ; ou de 500 à 600 g/mol ; ou de 600 à 700 g/mol ; ou de 700 à 800 g/mol ; ou de 800 à 900 g/mol ; ou de 900 à 1000 g/mol ; ou de 1000 à 1100 g/mol ; ou de 1100 à 1200 g/mol ; ou de 1200 à 1300 g/mol ; ou de 1300 à 1400 g/mol ; ou de 1400 à 1500 g/mol.

Ce type de polyétheramines (formule (V)) est par exemple commercialisé sous le nom « Jeffamine serie EDR » par la société HUNTSMAN.

Selon d'autres modes de réalisation, la polyamine peut être une polyétheramine primaire comprenant trois groupements aminés. Alternativement, la polyamine peut être une polyamine secondaire ou tertiaire comprenant trois groupements aminés.

Ainsi, lorsqu'il s'agit d'une polyétheramine comprenant trois groupements aminés, elle peut avoir une formule (VI) :

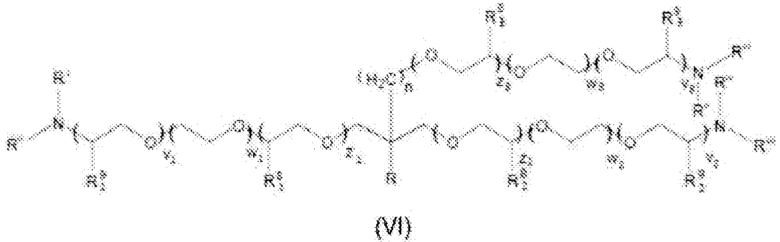

R₁⁸, R₁⁹, R₂⁸, R₂⁹, R₂⁹, R₃⁸, et R₃⁹ peuvent représenter indépendamment un groupement comprenant de 1 à 10 atomes de carbone, de préférence de 1 à 6 atomes de carbone, et encore de préférence de 1 à 2 atomes de carbone. Ces groupements peuvent être linéaires ou ramifiés, saturés ou insaturés.

R₁⁸, R₁⁹, R₂⁸, R₂⁹, R₂⁹, R₃⁸, et R₃⁹ peuvent indépendamment être choisis parmi un groupement alkyle, un groupement cycloalkyle, ou un groupement aryle, ces groupements étant comme décrits ci-dessus. De préférence, au moins un des R₁⁸, R₁⁹, R₂⁸, R₂⁹, R₂⁹, R₃⁸, et R₃⁹ est un groupement alkyle. De préférence encore R₁⁸, R₁⁹, R₂⁸, R₂⁹, R₂⁹, R₃⁸, et R₃⁹ sont choisi parmi un groupement méthyle ou un groupement éthyle.

Selon certains modes de réalisation préférés, R₁⁸, R₁⁹, R₂⁸, R₂⁹, R₂⁹, R₃⁸, et R³⁹ peuvent être identiques, par exemple ils sont tous un groupement de méthyle.

Selon d'autres modes de réalisation, R₁⁸, R₁⁹, R₂⁸, R₂⁹, R₂⁹, R₃⁸, et R₃⁹ peuvent être différents l'un de l'autre.

Selon certains modes de réalisation, R₁⁸ est différent de R₂⁸ et/ou de R₃⁹.

Selon certains modes de réalisation, R₁⁹ est différent de R₂⁹ et/ou de R₃⁹.

Selon des modes de réalisation préférés, au moins un des R₁⁸, R₁⁹ et/ou au moins un des R₂⁸, R₂⁹ et/ou au moins un des R₃⁸, R₃⁹ et/ou est un groupement méthyle et l'autre des R₁⁸, R₁⁹ et/ou des R₂⁸, R₂⁹ et/ou des R₃⁸, R₃⁹ et/ou est un groupement éthyle.

R peut représenter un atome d'hydrogène et un groupement comprenant de 1 à 10 atomes de carbone, et de préférence de 1 à 3 atomes de carbone. Ce groupement peut être linéaire ou ramifié.

Selon certains modes de réalisation R peut être choisi parmi un groupement alkyle, un groupement cycloalkyle, un groupement arylalkyle, ou un groupement aryle, les groupements alkyle, cycloalkyle, arylalkyle et aryle étant comme décrits ci dessus.

Lorsque R est un groupement comprenant de 1 à 10 atomes de carbone, il est de préférence un groupement alkyle, de préférence comprenant de 1 à 3 atomes de carbone, et de préférence de 1 à 2 atomes de carbone.

Selon certains modes de réalisation R est un atome d'hydrogène.

Selon d'autres modes de réalisation, R est un groupement éthyle.

Rⁱ, Rⁱⁱ, Rⁱⁱⁱ et R^{iv} sont aussi tels que détaillés ci-dessus.

Selon certains modes de réalisation, z₁, z₂ et z₃ peuvent représenter un nombre de 0 à 80, et de préférence de 0 à 70. Par exemple, z₁, z₂ et z₃ peuvent être de 0 à 5 ; ou de 5 à 10 ; ou de 10 à 15 ; ou de 15 à 20 ; ou de 20 à 25 ; ou de 25 à 30 ; ou de 30 à 35 ; ou de 35 à 40 ; ou de 40 à 45 ; ou de 45 à 50 ; ou de 50 à 55 ; ou de 55 à 60 ; ou de 60 à 65 ; ou de 65 à 70 ; ou de 70 à 75 ; ou de 75 à 80. Les nombres z₁, z₂ et z₃ peuvent être un nombre entier ou non.

Selon certains modes de réalisation, w₁, w₂, et w₃ peuvent représenter un nombre de 0 à 50, et de préférence de 0 à 40. Par exemple, w₁, w₂, et w₃ peuvent être de 0 à 5 ; ou de 5 à 10 ; ou de 10 à 15 ; ou de 15 à 20 ; ou de 20 à 25 ; ou de 25 à 30 ; ou de 30 à 35 ; ou de 35 à 40. Les nombres w₁, w₂, et w₃ peuvent être un nombre entier ou non.

Selon certains modes de réalisation, v₁, v₂ et v₃ peuvent représenter un nombre de 0 à 20, et de préférence de 0 à 10. Par exemple, v₁, v₂ et v₃ peuvent être de 0 à 2 ; ou de 2 à 4 ; ou de 4 à 6 ; ou de 6 à 8 ; ou de 8 à 10 ; ou de 10 à 12 ; ou de 12 à 14 ; ou de 14 à 16 ; ou de 16 à 18 ; ou de 18 à 20. Les nombres v₁, v₂ et v₃ peuvent être un nombre entier ou non.

Selon certains modes de réalisation, au moins un des z₁, z₂ et z₃ est différent de 0.

Selon certains modes de réalisation, au moins un des v₁, v₂ et v₃ est différent de 0.

Selon d'autres modes de réalisation, au moins un des z₁, z₂ et z₃ est différent de 0, et v₁, v₂ et v₃ sont égaux à 0.

Selon certains modes de réalisation, au moins un des w₁, w₂ et w₃ est différent de 0.

Selon d'autres modes de réalisation, au moins un des w₁, w₂ et w₃ est égal à 0, de préférence au moins deux des w₁, w₂ et w₃ et de préférence les trois w₁, w₂ et w₃ sont égaux à 0.

Selon certains modes de réalisation, au moins un des v₁, et z₁ est égal à 0 et/ou au moins un des v₂, et z₂ est égal à 0 et/ou au moins un des v₃, et z₃ est égal à 0.

Selon des modes de réalisation préférés au moins un des v₁, et z₁ est égal à 0 et/ou au moins un des v₂, et z₂ est égal à 0 et/ou au moins un des v₃, et z₃ est égal à 0 et au moins un des w₁, w₂ et w₃ est égal à 0, de préférence au moins deux des w₁, w₂ et w₃ et de préférence les trois w₁, w₂ et w₃ sont égaux à 0.

La somme w₁ + w₂ + w₃ représente le nombre de groupements éthoxy présents dans la polyamine de formule (VI).

La somme v₁ + v₂ + v₃ + z₁ + z₂+ z₃ représente le nombre de groupements éthoxy substitués par R¹⁸, R¹⁹, R²⁸, R²⁹, R³⁸ et R³⁹ (de préférence des groupements propoxy ou butoxy) présents dans la polyamine de formule (IV).

La somme v₁ + V2 +v3 + z₁ + z₂ + z₃ peut être un nombre entier ou non. Par exemple, si un mélange de différents oxydes d'alkylène est utilisé, cette somme correspond au degré moyen d'éthoxylation des groupements éthoxy substitués par R¹⁸, R¹⁹, R²⁸, R²⁹, R³⁸ et R³⁹ (de préférence au degré de propoxylation et/ou de butoxylation).

Les sommes z₁ + z₂ + z₃, v₁+ v₂ + v₃ et w₁ + w₂ + w₃ peuvent représenter indépendamment un nombre de 0 à 90, préférentiellement de 0 à 70, préférentiellement de 0 à 50 et encore plus préférentiellement de 0 à 30. Ainsi, ce nombre peut être de 0 à 10 ; ou de 10 à 20 ; ou de 20 à 30 ; ou de 30 à 40 ; ou de 40 à 50 ; ou de 50 à 60 ; ou de 60 à 70 ; ou de 70 à 80 ; ou de 80 à 90.

Selon certains modes de réalisation, lorsque w1, w₂, w₃, z₁, z₂ et z₃ sont égaux à 0, v₁ + v₂ + v₃ peut être de 2 à 90, et de préférence de 4 à 90. Par exemple, cette somme peut être de 2 à 5 ; ou de 5 à 10 ; ou de 10 à 20 ; ou de 20 à 30 ; ou de 30 à 40 ; ou de 40 à 50 ; ou de 50 à 60 ; ou de 60 ou 70 ; ou de 70 à 80 ; ou 80 à 90.

Le nombre n peut représenter un nombre de 0 à 30, de préférence de 1 à 20, et encore de préférence de 1 à 10. Par exemple, n peut être de 0 à 5 ; ou de 5 à 10 ; ou de 10 à 15 ; ou de 15 à 20 ; ou de 20 à 25 ; ou de 25 à 30.

Selon certains modes de réalisation préférés, n peut être 0 ou 1.

Les polyétheramines de formule (VI) peuvent avoir une masse moléculaire de 300 à 6000 g/mol, de préférence de 300 à 5000 g/mol, de préférence de 300 à 4000 g/mol et de préférence de 300 à 3000 g/mol. Par exemple, les polyétheramines de formule (VI) peuvent avoir une masse moléculaire de 300 à 500 g/mol ; ou de 500 à 750 g/mol ; ou de 750 à 1000 g/mol ; ou de 1000 à 1250 g/mol ; ou de 1250 à 1500 g/mol ; ou de 1500 à 1750 g/mol ; ou de 1750 à 2000 g/mol ; ou de 2000 à 2250 g/mol ; ou de 2250 à 2500 g/mol ; ou de 2500 à 2750 g/mol ; ou de 2750 à 3000 g/mol ; ou de 3000 à 3250 g/mol ; ou de 3250 à 3500 g/mol ; ou de 3500 à 3750 g/mol ; ou de 3750 à 4000 g/mol ; ou de 4000 à 4250 g/mol ; ou de 4250 à 4500 g/mol ; ou de 4500 à 4750 g/mol ; ou de 4750 à 5000 g/mol ; ou de 5000 à 5250 g/mol ; ou de 5250 à 5500 g/mol ; ou de 5500 à 5750 g/mol ; ou de 5750 à 6000 g/mol.

Ce type de polyétheramines (formule (VI)) est par exemple commercialisé sous le nom « Jeffamine serie T » et « Jeffamine serie ST » par la société HUNTSMAN.

Dans l'ensemble des formules ci-dessus, les groupements d'indices t, x, y, v, w, z, vᵢ, wᵢ, zᵢ, peuvent être adjacents ou non dans la molécule. Par exemple, des groupements éthoxy peuvent alterner de manière aléatoire (selon une certaine distribution statistique) avec des groupements propoxy et/ou butoxy le long d'une même chaîne.

Alternativement, d'autres types de polyamines pouvant être utilisées dans le cadre de la présente invention sont les polyéthylèneimines (ou polyaziridines) c'est-à-dire un polymère comprenant un motif répétitif composé du groupe amine et du groupement biradical « -CH₂CH₂- » Ces polyamines peuvent être linéaires, ramifiées ou dendrimères. Des exemples incluent la tetraéthylènepentamine, l'EPOMIN SP012 ainsi que les polyéthylèneimines sous le nom Lupasol^{®} (notamment Lupasol^{®} FG) commercialsées par la société BASF.

Selon l'invention, le borane peut former un complexe avec l'amine, avec un rapport molaire de borane sur l'amine de 0,1 à 10, et de préférence de 0,5 à 5. De préférence, ce ratio est de 0,5 à 2. Ce ratio peut notamment être de 0,1 à 0,5 ; ou de 0,5 à 1 ; ou de 1 à 2 ; ou de 2 à 4 ; ou de 4 à 6 ; ou de 6 à 8 ; ou de 8 à 10. Par exemple, lorsqu'il s'agit d'une monoamine, ce rapport est de préférence d'environ 1. En revanche, lorsqu'il s'agit d'une diamine, ce rapport est de préférence d'environ 2.

Le complexe borane-amine peut être présent dans la partie A de la composition à une teneur massique de 0,1 à 100 %, de préférence de 1 à 50 %, et de préférence encore de 1 à 25 % par rapport à la masse totale de la partie A de la composition. Cette teneur peut être notamment de 0,1 à 1 % ; ou de 1 à 2% ; ou de 2 à 3 % ; ou de 3 à 4 % ; ou de 4 à 5 % ; ou de 5 à 6 % ; ou de 6 à 7 % ; ou de 7 à 8 % ; ou de 8 à 9 % ; ou de 9 à 10 % ; ou 10 à 11 % ; ou de 11 à 12% ; ou de 12 à 13 % ; ou de 13 à 14 % ; ou de 14 à 15 % ; ou de 15 à 16 % ; ou de 16 à 17 % ; ou de 17 à 18 % ; ou de 18 à 19 % ; ou de 19 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 % ou de 70 à 75 % ; ou de 75 à 80 % ; ou de 80 à 85 % ; ou de 85 à 90 % ; ou de 90 à 95 % ; ou de 95 à 100 %.

Plus particulièrement, la teneur en complexe borane-amine doit être suffisante afin de permettre une réaction complète. De l'autre côté, une teneur élevée en complexe borane-amine risque de conduire à une réaction rapide, ce qui empêcherait le mélange efficace de la partie A avec la partie B.

Selon certains modes de réalisation, le complexe borane-amine peut être préparé in situ dans la partie A de la composition.

Selon d'autres modes de réalisation préférés, le complexe borane amine peut être préparé avant son introduction dans la partie A de la composition. Cette préparation peut être effectuée selon le procédé décrit dans le brevet EP 2189463 ou selon le procédé décrit dans l'article de P. Veeraraghavan Ramachandran et al. (Amine-boranes bearing borane-incompatible functionalities: application to selective amine protection and surface functionalization, Chem. Commun., 2016, 52, 11885), par exemple en faisant réagir une amine telle que décrite ci-dessus, avec un composé borohydrure, tel que le borohydrure de sodium, le borohydrure de potassium ou le borohydrure de lithium. Cette réaction peut notamment être effectuée en présence d'un acide tel qu'un acide inorganique comme l'acide sulfurique, l'acide méthane sulfonique, l'acide chlorhydrique, l'acide nitrique, l'acide borique, de préférence en présence d'acide sulfurique.

### Agent décomplexant

La composition bi-composante, et plus particulièrement la partie B de la composition bi-composante comprend un agent décomplexant. Par « agent décomplexant » on entend un composé capable de réagir avec l'amine comprise dans le complexe borane-amine, afin de libérer le borane. Le borane pourra ensuite initier la polymérisation d'un monomère présent dans la composition. Ainsi, le borane est libéré après le mélange de la partie A de la composition avec la partie B.

Le choix de l'agent décomplexant dépend de la nature de l'amine (amine primaire, secondaire, ou tertiaire).

Dans le cadre de la présente invention, l'agent décomplexant peut être choisi parmi un isocyanate, un acide de Lewis, un acide carboxylique, un acide minéral, un acide phosphonique, un acide sulfonique un chlorure d'acyle, un anhydride, un aldéhyde, un composé 1,3 dicarbonylé et un époxyde. De préférence, l'agent décomplexant est un isocyanate.

Des composés dérivés de diisocyanates tels que les biurets, les uretdiones, les isocyanurates, les allophanates et les diisocyanates oligomères peuvent également être utilisés dans le cadre de la présente invention comme agent décomplexant.

Ainsi, l'isocyanate utilisé dans le cadre de cette invention peut comprendre tout composé comprenant au moins un et de préférence au moins deux groupements isocyanates (polyisocyanates).

A titre d'exemple, la composition bi-composante, et plus particulièrement la partie B de la composition, peut comprendre un ou plusieurs composés isocyanates choisis parmi les alkylène diisocyanates, les cycloalkylène diisocyanates, des diisocyanates aromatiques et aliphatique-aromatiques.

Des exemples spécifiques de tels types d'isocyanate peuvent comprendre l'éthylène-1,2-diisocyanate, le propylène-1,3-diisocyanate, le butylène-1,4-diisocyanate, le pentaméthylène-1,5-diisocyanate (PDI), l'hexaméthylène-1,6-diisocyanate (HDI), le toluène-2,4 diisocyanate (2,4-TDI), le toluène-2,6 diisocyanate (2,6-TDI), le cyclopentylène-1,3-diisocyanate, le cyclohexylène-1,4-diisocyanate, le cyclohexylène-1,2-diisocyanate, l'isophorone diisocyanate (IPDI), le diphénylméthane-4,4'-diisocyanate (4,4' MDI), le diphénylméthane-2,4'-diisocyanate (2,4'-MDI), le diphénylméthane-2,2'-diisocyanate (2,2'-MDI), le diphénylpropane-4,4'-diisocyanate (DPDI), le m-xylylène diisocyanate (m-XDI), le tétraméthylxylène diisocyanate (TMXDI), le naphtylène-1,4-diisocyanate, le naphtylène-1,5-diisocyanate, le m phénylène diisocyanate (MPDI), le p-phénylène diisocyanate (PPDI), le diphénylsulphone-4,4'-diisocyanate, le furfurylène diisocyanate, le 4,4',4" triisocyanatotriphénylméthane, le benzène 1,3,5-triisocyanate, l'isocyanurate de HDI, l'isocyanurate de TDI, l'isocyanurate de m-XDI, l'isocyanurate de IPDI (VESTANAT^{®} T1890/100 commercialisé par la société EVONIK), un allophanate de HDI (TOLONATE X FLO 100 commercialisé par la société VENVOREX), le biuret de HDI, l'uretdione de HDI (DESMODUR N 3400 commercialisé par la société COVESTRO), l'adduit glycérol/TDI, l'adduit TDI/triméthylolpropane, l'adduit m-XDI/glycérol, l'adduit m-XDI/triméthylolpropane (TAKENATE^{®} D-110N commercialisé par la société MITSUI CHEMICALS, l'adduit m-H6XDI/triméthylolpropane (TAKENATE^{®} D-120N commercialisé par la société MITSUI CHEMICALS.

De manière préférée, le composé isocyanate utilisé comme agent décomplexant peut être un prépolymère ayant au moins une extrémité isocyanate obtenu par exemple après la réaction d'un composé isocyanate comme décrit ci-dessus avec un polyol ou une polyamine. L'utilisation d'un prépolymère ayant au moins une extrémité isocyanate est avantageuse étant donné qu'elle peut permettre d'obtenir la partie B de la composition avec une viscosité plus élevée que dans le cas où un monomère isocyanate est utilisé.

Le prépolymère peut en particulier être un polyuréthane.

Lorsque l'agent décomplexant est un acide de Lewis, celui-ci peut par exemple être choisi parmi le chlorure d'étain ou le chlorure de titane.

Lorsque l'agent décomplexant est un acide carboxylique, celui-ci peut par exemple être choisi parmi l'acide acrylique, l'acide méthacrylique, l'acide formique, l'acide acétique, l'acide éthyl-2-hexanoique, l'acide laurique, l'acide benzoïque, et l'acide p méthoxybenzoïque ou parmi les acides dicarboxyliques tels que l'acide oxalique, l'acide malonique, l'acide succinique, l'acide glutarique, l'acide maléique, l'acide adipique, l'acide phtalique, l'acide fumarique, l'acide glycolique, l'acide thioglycolique, l'acide lactique, l'acide isophtalique et l'acide téréphtalique.

Lorsque l'agent décomplexant est un acide minéral, celui-ci peut par exemple être choisi parmi l'acide chlorhydrique (HCl), l'acide sulfurique (H2SO4), l'acide phosphorique (H3PO4), l'acide phosphoreux (H3PO3), l'acide hypophosphoreux (H3PO2) et l'acide silicique.

Lorsque l'agent décomplexant est un acide phosphonique, celui-ci peut par exemple être choisi parmi l'acide vinylphosphonique, l'acide phénylphosphonique, l'acide méthylphosphonique et l'acide octadecylphosphonique.

Lorsque l'agent décomplexant est un acide sulfonique, celui-ci peut par exemple être choisi parmi l'acide méthanesulfonique et l'acide benzènesulfonique.

Lorsque l'agent décomplexant est un anhydride, celui-ci peut par exemple être choisi parmi l'anhydride acétique, l'anhydride propionique, l'anhydride acrylique, l'anhydride méthacrylique, l'anhydride hexanoïque, l'anhydride décanoïque, l'anhydride laurique, l'anhydride benzoïque, l'anhydride maléique, l'anhydride succinique, l'anhydride méthyl succinique, l'anhydride de 2-octen-1-yl succinique, l'anhydride de 2-dodécen-1-yl succinique, l'anhydride de dodécenylsuccinique, l'anhydride de cyclohexanedicarboxylique, l'anhydride phthalique, l'anhydride trimellitique et l'anhydride pyroméllitique.

Lorsque l'agent décomplexant est un aldéhyde, celui-ci peut par exemple être choisi parmi le benzaldéhyde, le o-, m- et p-nitrobenzaldéhyde, le 2,4-dichlorobenzaldéhyde, le p-tolylaldéhyde et 3-méthoxy-4-hydroxybenzaldéhyde. Des acétals et des dialdéhydes peuvent également être utilisés.

Lorsque l'agent décomplexant est un composé 1,3 dicarbonylé, celui ci peut par exemple être choisi parmi l'acétoacétate de méthyle, l'acétoacétate d'éthyle, l'acétoacétate de tert-butyle, l'acétoacétate de 2 méthacryloyloxyéthyle, le bis-acétoacétate de diéthylène glycol, le tris acétoacétate de polycaprolactone, le bis-acétoacétate de polypropylène glycol, le poly(styrène-co-allyle acétoacétate), le N,N diméthylacétoacétamide, le N-méthylacétoacétamide, le acétoacétanilide, le bis-acétoacétamide d'éthylène, le bis-acétoacétamide polypropylène glycol, l'acétoacétamide et l'acétoacétonitrile.

L'agent décomplexant peut être présent dans la partie B de la composition à une teneur massique de 0,1 à 70 %, et de préférence de 10 à 60 % par rapport à la masse totale de la partie B de la composition. Ainsi, la teneur en agent décomplexant dans la partie B peut notamment être de 0,1 à 1 % ; ou de 1 à 5 % ; ou de 5 à 10 % ; ou de 10 à 15 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 %.

Plus particulièrement, selon le monomère acrylique utilisé dans la formule, les teneurs en complexe borane-amine et en agent décomplexant doivent être ajustés afin d'atteindre un taux de polymérisation satisfaisant.

### Composé polymérisable par voie radicalaire

La composition bi-composante comprend au moins un composé polymérisable par voie radicalaire comprenant au moins une liaison éthylénique. La « polymérisation par voie radicalaire » est une polymérisation en chaîne qui fait intervenir comme espèce active des radicaux. Elle fait intervenir des réactions d'amorçage, de propagation, de terminaison et de transfert de chaîne. Ainsi, après l'activation du borane suite à sa décomplexation du complexe borane-amine, celui-ci peut initier la polymérisation du ou des composé(s) polymérisable(s) pour former un réseau de polymère(s).

Ce composé peut être présent dans au moins une des deux parties (A et B) de la composition.

Selon certains modes de réalisation, le composé polymérisable par voie radicalaire est présent uniquement dans la partie A de la composition.

Selon d'autres modes de réalisation préférés, le composé polymérisable par voie radicalaire est présent uniquement dans la partie B de la composition.

Selon encore d'autres modes de réalisation, le composé polymérisable par voie radicalaire est présent dans la partie A ainsi que dans la partie B de la composition.

Le fait que le composé polymérisable par voie radicalaire peut être présent dans la partie A de la composition malgré la présence du complexe borane-amine est possible dû à la stabilité améliorée de ce complexe par rapport à un complexe organoborane-amine. Ainsi, l'invention présente l'avantage de pouvoir fournir une partie A de composition stable comprenant non seulement le complexe borane-amine mais aussi le composé polymérisable par voie radicalaire.

Le composé polymérisable par voie radicalaire peut comprendre tout monomère, oligomère et polymère, ainsi que leurs mélanges, comprenant une insaturation oléfinique et étant polymérisable par voie radicalaire. Par exemple, le composé polymérisable par voie radicalaire peut être choisi parmi les monomères styrèniques, vinyliques, acryliques et méthacryliques. Ceux-là peuvent inclure le styrène, le α-méthyle styrène, les vinyle esters tels que le néodécanoate de vinyle et l'acétate de vinyle, les monomères ou oligomères acryliques et méthacryliques tels que l'acide acrylique, l'acide méthacrylique, l'acrylonitrile, le méthacrylonitrile, les amides d'acide acrylique (ou acrylamides), les amides d'acide méthacrylique (ou méthacrylamides), les esters d'acide acrylique (ou acrylates) et les esters d'acide méthacrylique (ou méthacrylates).

Selon des modes de réalisation préférés, le composé polymérisable par voie radicalaire est un monomère acrylique ou méthacrylique tel que l'acide acrylique, l'acide méthacrylique, l'acrylonitrile, le méthacrylonitrile, les acrylamides, les méthacrylamides, les acrylates et les méthacrylates.

Le composé polymérisable par voie radicalaire peut par exemple être choisi parmi l'acide acrylique, l'acide méthacrylique, des monomères acrylates, des monomères méthacrylates et des mélanges de ceux-ci, le groupement alkyle des esters acryliques (acrylates) et méthacryliques (méthacrylates) ayant de préférence de 1 à 22 atomes de carbones, saturés ou insaturés, linéaire, ramifié ou cyclique pouvant comprendre au moins un hétéroatome (O,S) ou une fonction ester (-COO-) ; et le groupement alkyle ayant de préférence de 1 à 12 atomes de carbones et étant linéaire, ramifié ou cyclique.

Avantageusement, le composé polymérisable par voie radicalaire peut être choisi parmi les acrylates et méthacrylates d'alkyles et de cycloalkyles tels que l'acide acrylique, l'acrylate de méthyle, l'acrylate d'éthyle, l'acrylate de n propyle, l'acrylate d'isopropyle, l'acrylate d'allyle, l'acrylate de n butyle, l'acrylate d'isobutyle, l'acrylate de t-butyle, l'acrylate de n-hexyle, l'acrylate de n-octyle, l'acrylate d'isooctyle (SR440 commercialisé par la société SARTOMER), l'acrylate de 2 éthylhexyle, l'acrylate de n-décyle, l'acrylate d'isodecyle (SR395 commercialisé par SARTOMER), l'acrylate de lauryle (SR335 commercialisé par SARTOMER), l'acrylate de tridécyle (SR489 commercialisé par la soiété SARTOMER), l'acrylate d'alkyle en C12-C14 (SR336 commercialisé par SARTOMER), l'acrylate de n-octadecyle (SR484 commercialisé par la société SARTOMER), l'acrylate d'alkyle en C16-C18 (SR257C commercialisé par la société SARTOMER), l'acrylate de cyclohexyle, l'acrylate de t butyle cyclohexyle (SR217 commercialisé par la société SARTOMER), l'acrylate de 3,3,5-triméthyl cyclohexyle (SR420 commercialisé par la société SARTOMER), l'acrylate d'isobornyle (SR506D commercialisé par la société SARTOMER), l'acide méthacrylique, le méthacrylate de méthyle, le méthacrylate d'éthyle, le méthacrylate de n-propyle, le méthacrylate d'allyle, le méthacrylate d'isopropyle, le méthacrylate de n-butyle, le méthacrylate d'isobutyle, le méthacrylate de t-butyle, le méthacrylate de cyclohexyle, le méthacrylate de n-hexyle, le méthacrylate de n-octyle, le méthacrylate d'isooctyle, le méthacrylate de 2-éthylhexyle, le méthacrylate d'isobornyle, le méthacrylate de n-décyle, le méthacrylate d'isodécyle, le méthacrylate de n-dodécyle, le méthacrylate de tridécyle et des mélanges de ceux-ci. Des composés particulièrement préférés sont l'acrylate de méthyle, l'acrylate d'éthyle, l'acrylate de butyle, l'acrylate de 2-éthylhexyle, le méthacrylate de méthyle, le méthacrylate d'éthyle, le méthacrylate de butyle et le méthacrylate de 2-éthylhexyle.

De plus, le composé polymérisable par voie radicalaire peut être choisi parmi les acrylates et méthacrylates comprenant des hétéroatomes, c'est à dire des acrylates et méthacrylates qui comportent au moins un atome qui n'est pas un carbone ou hydrogène dans le groupe de la partie d'alcool de l'ester (sans prendre en compte les atomes du groupe ester lui même). De préférence, l'atome est un oxygène. Ainsi, le composé polymérisable par voie radicalaire peut être choisi parmi l'acrylate de tétrahydrofurfuryle (SR285 commercialisé par la société SARTOMER), le méthacrylate de tétrahydrofurfuryle (SR203H commercialisé par la société SARTOMER), l'acrylate de glycidyle, l'acrylate de 2 hydroxyéthyle, l'acrylate de 2- et 3 hydroxypropyle, l'acrylate de 2 méthoxyéthyle, l'acrylate de 2 éthoxyéthyle, l'acrylate de 2- et 3 éthoxypropyle, l'acrylate de 2-(2-éthoxyéthoxy)éthyle (SR256 commercialisé par la société SARTOMER), l'acrylate de méthoxy-polyéthylène glycol (comprenant de préférence 2 à 8 motifs (éthoxy) de répétition), l'acrylate de polyéthylène glycol (comprenant de préférence 2 à 8 motifs (éthoxy) de répétition), l'acrylate de polypropylène glycol (comprenant de préférence 2 à 8 motifs (propoxy) de répétition), l'acrylate de polycaprolactone (SR495B commercialisé par la société SARTOMER), l'acrylate de 2-phénoxyéthyle (SR339C commercialisé par la société SARTOMER), l'acrylate de 2-[2-[2-(2-phénoxyéthoxy)éthoxy]éthoxy]éthyle (SR410 commercialisé par la société SARTOMER), l'acrylate de 2-[2-[2-(2-nonylphénoxyéthoxy)éthoxy]éthoxy]éthyle (SR504D commercialisé par la société SARTOMER), l'acrylate de triméthylolpropane formal cyclique (SR531 commercialisé par la société SARTOMER), l'acrylate de glycérol formal cyclique, l'acrylate de 2-[2-[2-(2-dodecyloxyéthoxy)éthoxy]éthoxy]éthyle (SR9075 commercialisé par la société SARTOMER), le méthacrylate de glycidyle, le méthacrylate de 2-hydroxyéthyle, le méthacrylate de 2- et 3 hydroxypropyle, le méthacrylate de 2 méthoxyéthyle, le méthacrylate de 2 éthoxyéthyle, , le méthacrylate de 2- et 3 éthoxypropyle, le méthacrylate de 2-(2-éthoxyéthoxy)éthyle, le méthacrylate de méthoxy-polyéthylène glycol (comprenant de préférence 2 à 8 motifs (éthoxy) de répétition), le méthacrylate de polyéthylène glycol (comprenant de préférence 2 à 8 motifs (éthoxy) de répétition), le méthacrylate de polypropylène glycol (comprenant de préférence 2 à 8 motifs (propoxy) de répétition), le méthacrylate de triméthylolpropane formal cyclique, le méthacrylate de glycérol formal cyclique (VISIOMERO GLYFOMA commercialisé par la société EVONIK) et des mélanges de ceux-ci. Les acrylates et méthacrylates d'éthylène glycol, diéthylène glycol, triméthylpropane, thiéthylène glycol, tétraéthylène glycol, dipropylène glycol, triopropylène glycol, tétrapropylène glycol, pentapropylène peuvent également être utilisés. Des composés particulièrement préférés sont l'acrylate de 2 hydroxyéthyle, l'acrylate de 2-hydroxypropyle, l'acrylate de polycaprolactone, le méthacrylate de 2-hydroxyéthyle, le méthacrylate de 2-hydroxypropyle et le méthacrylate de polycaprolactone.

Des composés diacrylates et diméthacrylates peuvent aussi être utilisés dans le cadre de cette invention. De tels composés incluent le diacrylate d'éthylène glycol, le diacrylate de 1,3-butylène glycol, le diacrylate de 1,4-butanediol, le diacrylate de 1,6-hexanediol (SR238 commercialisé par la société SARTOMER), le diacrylate de 3-méthyl-1,5-pentanediol (SR341 commercialisé par la société SARTOMER), le diacrylate de cyclohexanediméthanol, le diacrylate de néopentyle glycol, le diacrylate de 1,10-décanediol (SR595 commercialisé par la société SARTOMER), le diacrylate de tricyclodecanediméthanol (SR833S commercialisé par la société SARTOMER), le diacrylate d'esterdiol (SR606A commercialisé par SARTOMER), les diacrylates aliphatiques alkoxylés tels que le diacrylate de diéthylène glycol, le diacrylate de triéthylène glycol (SR272 commercialisé par la société SARTOMER), le diacrylate de dipropylène glycol (SR508 commercialisé par la Société SARTOMER), le diacrylate de tripropylène glycol (SR306 commercialisé par la société SARTOMER), le diacrylate de tétraéthylène glycol (SR268G commercialisé par la société SARTOMER), les diacrylates de cyclohexanediméthanol éthoxylés et/ou propoxylés, les diacrylates de hexanediol éthoxylés et/ou propoxylés, les diacrylates de néopentyle glycol éthoxylés et/ou propoxylés, le diacrylate de néopentyle glycol hydroxypivalate modifié caprolactone, le diacrylate de dipropylène glycol, le diacrylate de bisphénol A éthoxylé (3) (SR349 commercialisé par la Société SARTOMER), le diacrylate de bisphénol A éthoxylé (10) (SR602 commercialisé par la société SARTOMER), le diacrylate de bisphénol A éthoxylé (30), le diacrylate de bisphénol A éthoxylé (40), le diacrylate de polyéthylène glycol (200) (SR259 commercialisé par la société SARTOMER), le diacrylate de polyéthylène glycol (400) (SR344 commercialisé par la société SARTOMER), le diacrylate de polyéthylène glycol (600) (SR610 commercialisé par la société SARTOMER), les diacrylates de néopentyle glycol propoxylés, le diméthacrylate d'éthylène glycol, le diméthacrylate de 1,3-butylène glycol, le diméthacrylate de 1,4-butanediol, le diméthacrylate de 1,6-hexanediol, le diméthacrylate de 3-méthyl-1,5-pentanediol, le monométhacrylate de 1,6-hexanediol mono acrylate, le diméthacrylate de cyclohexanediméthanol, le diméthacrylate de néopentyle glycol, le diméthacrylate de tricyclodecanediméthanol, les méthacrylates aliphatiques alkoxylés tels que le diméthacrylate de triéthylène glycol, le diméthacrylate de tripropylène glycol, le diméthacrylate de tétraéthylène glycol, les diméthacrylates de cyclohexanediméthanol éthoxylés et/ou propoxylés, les diméthacrylates de hexanediol éthoxylés et/ou propoxylés, les diméthacrylates de néopentyle glycol éthoxylés et/ou propoxylés, le diméthacrylate de néopentyle glycol hydroxypivalate modifié caprolactone, le diméthacrylate de diéthylène glycol, le diméthacrylate de dipropylène glycol, le diméthacrylate de tripropylène glycol, le diméthacrylate de bisphénol A éthoxylé (10), le diméthacrylate de bisphénol A éthoxylé (3), le diméthacrylate de bisphénol A éthoxylé (30), le diméthacrylate de bisphénol A éthoxylé (40), le diméthacrylate de polyéthylène glycol (200), le diméthacrylate de polyéthylène glycol (400), le diméthacrylate de polyéthylène glycol (600), les diméthacrylates de néopentyle glycol éthoxylés et/ou propoxylés et les mélanges de ceux-ci.

Des composés triacrylates et triméthacrylates peuvent aussi être utilisés dans le cadre de cette invention. Tels composés incluent le triméthacrylate de glycérol, le triacrylate de glycérol, les triacrylates de glycérol éthoxylés et/ou propoxylés, le triacrylate de triméthylolpropane (SR351 commercialisé par la société SARTOMER), les triacrylates de triméthylolpropane éthoxylés et/ou propoxylés, le triacrylate de pentaérythritol (SR444D commercialisé par la société SARTOMER), les triacrylates de triméthylolpropane éthoxylés et/ou propoxylés, le triméthacrylate de triméthylolpropane, et le triacrylate de tris(2-hydroxyéthyl)isocyanurate (SR368 commercialisé par la société SARTOMER), le triméthacrylate de tris(2-hydroxyéthyl)isocyanurate, les triméthacrylates de glycérol éthoxylés et/ou propoxylés, les triméthacrylates de triméthylolpropane éthoxylés et/ou propoxylés, et le triméthacrylate de pentaérythritol,

Des composés comprenant plus de trois groupements acrylate ou méthacrylate peuvent également être utilisés tels que par exemple le tétraacrylate de pentaérythritol (SR295 commercialisé par la société SARTOMER), le tétraacrylate de di-triméthylolpropane (SR355 commercialisé par la société SARTOMER), le pentaacrylate de di-pentaérythritol (SR399 commercialisé par la société SARTOMER), les tétraacrylates de pentaérythritol éthoxylés et/ou propoxylés, le tétraméthacrylate de pentaérythritol, le tétraméthacrylate de di-triméthylolpropane, le pentaméthacrylate de di-pentaérythritol et les tetraméthacrylates de pentaérythritol éthoxylés et/ou propoxylés.

De plus, le composé polymérisable par voie radicalaire peut être choisi parmi des oligomères acryliques et méthacryliques tels que les uréthane-acrylates et uréthane-méthacrylates, les polyester-acrylates, les polyester-méthacrylates, les polybutadiène-acrylates (SR307 commercialisé par la société SARTOMER) et les polybutadiène-méthacrylates. Des composés préférés de cette catégorie sont par exemple les CN1963, CN1964, CN992, CN981, CN9001, CN9002, CN9012, CN9200, CN964A85, CN965, CN966H90, CN991, CN9245S, CN998B80, CN9210, CN9276, CN9209, PRO21596, CN9014NS, CN9800, CN9400, CN9167, CN9170A86, CN9761, CN9165A commercialisés par la société SARTOMER.

Des composés polymérisables par voie radicalaire pouvant être utilisés dans le cadre de l'invention peuvent également inclure des acrylamides et méthacrylamides. Par exemple ces monomères peuvent être choisis parmi l'acrylamide, le méthacrylamide, le N (hydroxyméthyl)acrylamide, le N (hydroxyéthyl)acrylamide, le N (isobutoxyméthyl)acrylamide, le N (3 méthoxypropyl)acrylamide, le N {tris(hydroxyméthyl)méthyl]acrylamide, le N-isopropylacrylamide, le N [3 (diméthylamino)propyl]méthacrylamide, l'acrylamide de diacétone, le N,N'-méthylènediméthacrylamide, le N,N' méthylènediacrylamide, le N,N' (1,2-dihydroxyéthylène)bisméthacrylamide et le N,N'-(1,2-dihydroxyéthylène)bisacrylamide ainsi que parmi les acrylamides et méthacrylamides formés après réaction de l'acide acrylique ou méthacrylique (ou du chlorure d'acyle de cet acide) avec des (poly)amines primaires et/ou secondaires telles que le 1,3-diaminopropane, le N,N'-diméthyl-1,3-diaminopropane, le 1,4-diaminobutane, les polyamidoamines et les polyoxyalkylènepolyamines.

Selon certains modes de réalisation, un seul composé polymérisable par voie radicalaire est présent dans la partie A et/ou la partie B de la composition.

Selon d'autres modes de réalisation, plusieurs composés polymérisables par voie radicalaire sont présents dans la partie A et/ou la partie B de la composition.

Le ou les composés polymérisables par voie radicalaire peuvent être présents dans la partie A et/ou la partie B de la composition à une teneur massique de 10 à 70 %, et de préférence de 10 à 60 % par rapport à la masse totale de la partie A et/ou de la partie B de la composition. Cette teneur peut être par exemple de 10 à 15 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 %.

### Composition bi-composante

La composition bi-composante peut également comprendre au moins une amine additionnelle, l'amine additionnelle étant comme défini ci-dessus.

De préférence, l'amine additionnelle est présente dans la partie A de la composition. La présence de l'amine (en excès par rapport au borane) permet d'éviter une décomplexation prématurée du borane, et ainsi de stabiliser le complexe borane-amine (et donc la partie A de la composition) de sorte à augmenter sa durée de conservation.

Selon certains modes de réalisation, cette amine additionnelle est la même que l'amine présente dans le complexe borane-amine.

Selon d'autres modes de réalisation, cette amine additionnelle est différente que l'amine présente dans le complexe borane-amine.

Selon certains modes de réalisation, une seule amine additionnelle est présente dans la composition bi-composante.

Selon d'autres modes de réalisation, deux ou plus que deux amines additionnelles sont présentes dans la composition bi-composante.

Selon des modes de réalisation préférés, il s'agit d'une polyétheramine.

L'amine additionnelle peut être présente dans la composition bi composante, et de préférence dans la partie A de la composition à une teneur massique de 0,01 à 30 %, et de préférence de 0,01 à 25 % par rapport à la masse totale de la composition et de préférence par rapport à la masse totale de la partie A de la composition. Cette teneur peut être notamment de 0,01 à 0,5 % ; ou de 0,5 à 1 % ; ou de 1 à 5 % ; ou de 5 à 10 % ; ou de 10 à 15 % ; ou de 15 à 20 % ; ou de 20 à 25 % ; ou de 25 à 30 %.

La composition bi-composante peut également comprendre un ou plusieurs additifs choisis parmi les charges, les plastifiants, les résines tackifiantes, les solvants, les stabilisants UV, les absorbeurs d'humidité, les matériaux fluorescents et les additifs rhéologiques.

De tels additifs peuvent être présents dans une des deux parties de la composition, ou alternativement dans les deux parties de la composition.

Par exemple, la partie A de la composition bi-composante peut comprendre des charges, des plastifiants, des résines tackifiantes, des solvants, des stabilisants UV, des absorbeurs d'humidité, les matériaux fluorescents et des additifs rhéologiques.

La partie B de la composition bi-composante peut par exemple comprendre des charges et des plastifiants.

Les charges peuvent être choisies parmi le talc, le mica, le kaolin, la bentonite, les oxydes d'aluminium, les oxydes de titane, les oxydes de fer, le sulfate de baryum, la hornblende, les amphiboles, le chrysotile, le noir de carbone, les fibres de carbone, les silices fumées ou pyrogénées, les tamis moléculaires, le carbonate de calcium, la wollastonite, les billes de verre, les fibres de verre, ainsi que leurs combinaisons.

En ce qui concerne le plastifiant, celui-ci peut être choisi parmi ceux connus de l'homme du métier dans les industries des revêtements ou des adhésifs. Il peut être mentionné, par exemple, des plastifiants à base de phtalate, d'ester de polyol (tel que, par exemple, le tétravalénate de pentaérythritol, commercialisé par Perstop), d'huile époxydée, d'esters alkylsulfoniques de phénol (produit Mesamoll^{®} commercialisé par la société Lanxess) et des mélanges de ceux-ci.

La résine tackifiante peut être notamment choisie parmi : les résines obtenues par polymérisation d'hydrocarbures terpéniques et de phénols, en présence de catalyseurs de Friedel-Crafts telles que la résine Dertophene^{®} 1510 disponible auprès de la société DRT possédant une masse molaire d'environ 870 Da, Dertophene^{®} H150 disponible auprès de la même société de masse molaire égale à environ 630 Da, Sylvarez^{®} TP 95 disponible auprès de la société Arizona Chemical ayant une masse molaire d'environ 1200 Da ; les résines obtenues par un procédé comprenant la polymérisation d'alpha-méthyl styrène telles que la résine Norsolene^{®} W100 disponible auprès de la société Cray Valley, qui est obtenue par polymérisation d'alpha-méthyl styrène sans action de phénols, avec une masse molaire en nombre de 900 Da, Sylvarez^{®} 510 qui est également disponible auprès de la société Arizona Chemical avec une masse molaire d'environ 1740 Da, dont le procédé d'obtention comprend également l'ajout de phénols ; les colophanes d'origine naturelle ou modifiées, et leurs dérivés hydrogénés, dimérisés, polymérisés ou estérifiés par des monoalcools ou des polyols telles que la résine Sylvalite^{®} RE 100 qui est un ester de collophane et de pentaeréthritol disponible auprès de la société Arizona Chemical et de masse molaire environ 1700 Da ; les résines obtenues par hydrogénation, polymérisation ou copolymérisation de mélanges d'hydrocarbures aliphatiques insaturés ayant environ 5, 9 ou 10 atomes de carbone issus de coupes pétrolières ; les résines terpéniques ; les copolymères à base de terpènes naturels ; et les résines acryliques ayant une viscosité à 100°C inférieure à 100 Pa.s.

Le solvant peut être un solvant volatil à température ambiante (température de l'ordre de 23°C). Le solvant volatil peut par exemple être choisi parmi les alcools volatils à température ambiante, tel que l'éthanol ou l'isopropanol. Le solvant volatil permet par exemple de diminuer la viscosité de la composition bi-composante (de la partie A et/ou de la partie B) et de rendre la composition plus facile à appliquer. Le caractère volatil du solvant permet au produit obtenu après réticulation de la composition, de ne plus contenir de solvant.

Les stabilisants UV peuvent être choisis parmi les benzotriazoles, les benzophénones, les amines dites encombrées telles que le bis(2,2,6,6, tétraméthyl-4-piperidyl)sébacéate, et leurs mélanges. On peut par exemple citer les produits TINUVIN^{®} 328 ou TINUVIN^{™} 770 commercialisés par BASF.

Le matériau fluorescent peut être par exemple du 2,5 thiophènediylbis(5-tert-butyl-1,3-benzoxazole) (Uvitex^{®} OB).

En ce qui concerne les additifs rhéologiques, ceux-ci peuvent être choisis parmi ceux connus de l'homme du métier dans les industries des revêtements ou des adhésifs. Il peut être mentionné, par exemple, la silice (en particulier la silice pyrogénée), une cire d'amide micronisée (telle que, par exemple, la série CRAYVALLAC commercialisée par Arkema).

Les additifs peuvent être présents dans la composition bi-composante à une teneur massique de 0,01 à 10 %, et de préférence de 0,01 à 5 % par rapport à la masse totale de la composition. Ainsi, les additifs peuvent notamment être présents dans la composition bi-composante à une teneur massique de 0,01 à 0,05 % ; ou de 0,05 à 0,1 % ; ou de 0,1 à 0,5 % ; ou de 0,5 à 1 % ; ou de 1 à 1,5 % ; ou de 1,5 à 2 % ; ou de 2 à 2,5 % ; ou de 2,5 à 3 % ; ou de 3 à 3,5 % ; ou de 3,5 à 4 % ; ou de 4 à 4,5 % ; ou de 4,5 à 5 % ; ou de 5 à 5,5 % ; ou de 5,5 à 6 % ; ou de 6 à 6,5 % ; ou de 6,5 à 7 % ; ou de 7 à 7,5 % ; ou de 7,5 à 8 % ; ou de 8 à 8,5 % ; ou de 8,5 à 9 % ; ou de 9 à 9,5 % ; ou de 9,5 à 10 % .

Les parties A et B de la composition bi-composante peuvent de préférence rester séparées jusqu'à l'utilisation de la composition. Ainsi, la décomplexation du borane et l'initiation de la polymérisation commencent lorsque la partie A de la composition vient en contact avec la partie B.

Le rapport massique de la partie A de la composition sur la partie B peut être de 0,05 à 20, de préférence de 0,1 à 10, et encore de préférence de 0,1 à 1. Selon certains modes de réalisation préférés, ce rapport peut être d'environ 1. Ainsi, le rapport massique de la partie A de la composition sur la partie B peut être de 0,05 à 0,1 ; ou de 0,1 à 0,5 ; ou de 0,5 à 0,8 ; ou de 0,8 à 1 ; ou de 1 à 1,2 ; ou de 1,2 à 2 ; ou de 2 à 4 ; ou de 4 à 6 ; ou de 6 à 8 ; ou de 8 à 10 ; ou de 10 à 20.

### Utilisation de la composition

La composition bi-composante selon l'invention peut être utilisée pour le traitement des substrats ayant une basse énergie de surface. Plus particulièrement, la composition bi-composante selon l'invention peut être utilisée pour le traitement de substrats ayant une énergie de surface inférieure ou égale à 45 mJ/m2, de préférence inférieure ou égale à 40 mJ/m2, et encore de préférence inférieure ou égale à 35 mJ/m2. Par exemple, cette énergie de surface peut être de 10 à 15 mJ/m2 ; ou de 15 à 20 mJ/m2 ; ou 20 à 25 mJ/m2 ; ou de 25 à 30 mJ/m2 ; ou 30 à 35 mJ/m2 ; ou de 35 à 40 mJ/m2 ; ou de 40 à 45 mJ/m2. Des substrats présentant une basse énergie de surface sont par exemple les polyoléfines telles que le polyéthylène, le polypropylène, le polybutadiène, le polyisoprène, le poly(fluorure de vinylidène), le polytétrafluoroéthylène ainsi que leurs copolymères. Ces valeurs d'énergie de surface sont bien connues dans l'état de l'art.

Selon certains modes de réalisation, la partie A de la composition peut être mélangée avec la partie B, avant enduction de la composition bi composante (mélange des parties A et B) à la surface d'un substrat. Ainsi, la décomplexation du borane et l'initiation de la polymérisation commencent lorsque les deux parties sont mélangées.

La partie A peut être mélangée avec la partie B à une température de 15 à 40°C, et de préférence de 20 à 25°C.

Ensuite, l'enduction de la composition bi-composante à la surface du substrat peut être effectuée à une température de 15 à 40°C, et de préférence de 20 à 25°C.

Selon d'autres modes de réalisation, l'une des deux parties A et B de la composition peut être enduite à la surface du substrat dans un premier temps, et dans un deuxième temps la deuxième des deux parties peut être enduite à la surface du substrat au-dessus de la première des deux parties. Ainsi, la décomplexation du borane et l'initiation de la polymérisation commencent lorsque la deuxième des parties A et B de la composition est enduite sur la surface du substrat.

L'enduction de la première des deux parties de la composition bi composante à la surface du substrat peut être effectuée à une température de 15 à 40°C, et de préférence de 20 à 25°C.

Ensuite, l'enduction de la deuxième des deux parties de la composition bi composante à la surface du substrat peut être effectuée à une température de 15 à 40°C, et de préférence de 20 à 25°C.

Selon certains modes de réalisation, dans un premier temps la partie A est enduite à la surface du substrat, et puis dans un deuxième temps la partie B est enduite au-dessus de la partie A sur la surface du substrat.

Selon d'autres modes de réalisation, dans un premier temps la partie A est enduite à la surface du substrat, et puis dans un deuxième temps la partie B est enduite au-dessus de la partie A sur la surface du substrat.

Ainsi, dans les deux modes de réalisation, la composition bi composante peut former une couche sur la surface du substrat. Cette couche peut avoir une épaisseur de 1 µm à 500 mm, et de préférence de 10 µm à 100 mm, et encore de préférence de 10 µm à 10 mm.

Selon certains modes de réalisation, la composition bi-composante selon l'invention peut être utilisée comme une composition adhésive, de sorte à coller deux substrats entre eux. Ainsi, après réticulation, la composition peut former une couche adhésive maintenant deux substrats fixés entre eux. Plus particulièrement, après enduction de la composition bi-composante sur la surface d'un substrat, la surface d'un substrat additionnel peut être mise en contact avec la surface enduite, de sorte à coller les deux substrats. Selon certains modes de réalisation, la mise en contact du substrat additionnel avec la surface enduite, l'ensemble peut être placée sous une presse chauffante de sort à accélérer le collage des deux substrats entre eux. La température de cette presse peut être par exemple de 60 à 110°C, et de préférence de 80 à 100°C.

De préférence au moins un des deux substrats est un substrat ayant une basse énergie de surface. Le deuxième substrat peut être également un substrat ayant une basse énergie de surface. Alternativement, le deuxième substrat peut être un matériau choisi parmi le papier, un métal tel que l'aluminium, un matériau polymérique autre que les substrats de basse énergie de surface, tel que les polyamides, le polystyrène, les polymères vinyliques tels que le polychlorure de vinyle, les polyéthers, les polyuréthanes, les polyesters, l'acrylonitrile butadiène styrène, le poly(méthacrylate de méthyle) et le caoutchouc naturel ou synthétique.

Selon d'autres modes de réalisation, la composition bi-composante selon l'invention peut être utilisée comme revêtement sur la surface d'un substrat. Ainsi, après réticulation, la composition peut former une couche couvrant la surface du substrat afin par exemple de modifier une ou plusieurs propriétés de sa surface. De préférence, ce substrat a une basse énergie de surface, comme décrit ci-dessus.

Selon encore d'autres modes de réalisation, la composition bi composante selon l'invention peut être utilisée comme primaire. Par « primaire » on entend une couche enduite sur un substrat de sorte à améliorer une ou plusieurs propriétés de la surface de ce substrat (par exemple de sorte à améliorer l'adhérence du substrat avec un matériau), afin que des couches supplémentaires puissent être appliquées sur le substrat comprenant la couche de primaire. Par exemple, l'enduction de la composition bi composante selon l'invention sur un substrat de basse énergie de surface peut permettre d'augmenter son énergie de surface afin de faciliter l'application d'une autre composition adhésive au-dessus de la composition bi composante.

Ainsi les articles fabriqués après application de la composition selon l'invention comprennent au moins une surface enduite avec la composition bi-composante.

Lorsque la composition bi-composante est utilisée en tant que primaire ou revêtement, il s'agit d'une surface externe de l'article.

Lorsque la composition bi-composante est utilisée en tant qu'adhésif, il s'agit d'une surface interne de l'article, c'est-à-dire une surface de l'article qui est en contact avec par exemple une autre surface de l'article, et la composition bi-composante se trouvant entre ces deux surfaces.

La composition bi-composante réticulée peut présenter une élongation à la rupture supérieure ou égale à 30 %. Cette élongation à la rupture peut être par exemple de 30 à 40 % ; ou de 40 à 50 % ; ou de 50 à 60 % ; ou de 60 à 70 % ; ou de 70 à 80 % ; ou de 80 à 90 % ; ou de 90 à 100 % ; ou supérieure à 100 %. L'élongation à la rupture peut être mesurée selon la norme ISO 37.

La composition bi-composante réticulée peut présenter un module d'élasticité inférieur ou égal à 100 MPa et de préférence encore inférieure ou égal à 60 MPa ; il peut être par exemple de 1 à 100 MPa ; de préférence de 3 à 50 MPa. Le module d'élasticité peut être mesuré selon la norme ISO 37.

### EXEMPLES

Les exemples suivants illustrent l'invention sans la limiter.

8 compositions bi-composantes (A à H) ont été préparées par mélange d'une partie A avec une partie B.

Les parties A et B ont été préparées dans une quantité de 100 g chacune.

Ces deux parties ont été mélangées à un rapport de 1.

La partie A des compositions A à G comprend de 2 à 15 % d'un complexe borane-amine comme indiqué dans le tableau ci-dessous. La partie A de la composition H comprend 6 % d'un complexe triéthylborane-amine (exemple comparatif).

**[Tableau 1]**

| Compositions | Complexe borane-amine |
|---|---|
| A | 2 % de diisopropylamine-borane |
| B | 6 % de diisopropylamine-borane |
| C | 6 % de Jeffamine M600-borane |
| D | 6 % de Jeffamine ED600-borane |
| E | 6 % de 1,3-propanediamine-bis borane |
| F | 15 % de Jeffamine ED600-borane |
| G | 15 % de Jeffamine M600-borane |
| H | 6 % de 1,3-propanediamine-triéthylborane |

Comme détaillé dans le tableau ci-dessous, la partie A pour chacune des compositions A à H comprend :
- du méthyle méthacrylate (MMA),
- du 2-hydroxyéthyle méthacrylate (HEMA),
- de la Jeffamine D2000,
- de la Jeffamine D230,
- une résine tackifiante (Dertophen T commrcialisé par la société DRT),
- de la silice pyrogénée hydrophile (Aerosil ^{®} R202 commercialisé par la société Evonik).

**[Tableau 2]**

| Compositions | MMA (%) | HEMA (%) | Jeffamine D2000 (%) | Jeffamine D230 (%) | Dertophen T (%) | Aerosil ^{®} 202 (%) |
|---|---|---|---|---|---|---|
| A | 32,3 | 12,5 | 26,1 | 2,1 | 21,9 | 3,1 |
| B | 31 | 12 | 25 | 2 | 21 | 3 |
| C | 31 | 12 | 25 | 2 | 21 | 3 |
| D | 31 | 12 | 25 | 2 | 21 | 3 |
| E | 31 | 12 | 25 | 2 | 21 | 3 |
| F | 28 | 10,9 | 22,6 | 1,8 | 19 | 2,7 |
| G | 28 | 10,9 | 22,6 | 1,8 | 19 | 2,7 |
| H | 31 | 12 | 25 | 2 | 21 | 3 |

La partie B pour chacune des 8 compositions est identique et comprend 30 % de monomère de méthylméthacrylate, 60 % d'un polyuréthane ayant des extrémités isocyanate et 10 % d'un uréthane diacrylate.

### Exemple 1

Dans cet exemple, chaque composition bi-composante a été enduite dans un substrat de polypropylène pour former une couche. Cette couche a été touchée avec la pointe d'une pipette tous les 30 secondes pendant 5 minutes, puis toutes les minutes pour 15 minutes, et puis toutes les 15 minutes pour 2 heures, de sorte à déterminer le moment où la réticulation est essentiellement achevée, lorsque la pipette n'adhère plus sur la couche.

**[Tableau 3]**

| Compositions | Temps (minutes) |
|---|---|
| A | 8 |
| B | 3,30 |
| C | 6 |
| D | 5,30 |
| E | 2 |
| F | 5 |
| G | 4 |
| H | <1 |

Les compositions A à G présentent un temps pour atteindre la réticulation relativement plus élevé que le temps de la composition H, ce qui permet d'avoir une fenêtre de temps de travail plus élevée.

### Exemple 2

Dans cet exemple, pour chaque composition, un échantillon est fabriqué en injectant la composition bi-composante dans un moule en téflon pour fabriquer des éprouvettes en forme d'haltères (forme de H). Après réticulation pendant 14 jours à des conditions ambiants (température 23°C±1°C, humidité 50%±5%), l'élongation à la rupture ainsi que le module d'élasticité a été mesuré en utilisant un dynamomètre INSTRON (à 100 mm/min) selon la norme ISO 37. Les résultats obtenus sont illustrés dans le tableau ci-dessous et correspondent à une moyenne de 5 mesures.

**[Tableau 4]**

| Compositions | Elongation à la rupture (%) | Module d'élasticité (MPa) |
|---|---|---|
| A | 68 | 5,0 |
| B | 61 | 3,9 |
| C | 45 | 50,5 |
| D | 63 | 22,5 |
| E | 34 | 20 |
| F | - | - |
| G | - | - |
| H | 11 | 201 |

Pour les compositions A à E comprenant de 2 à 6 % de complexe borane-amine, les résultats indiquent que les échantillons obtenus ont des meilleures propriétés mécaniques (meilleure souplesse et meilleure flexibilité) que l'échantillon fabriqué avec la composition H (comparatif). Concernant les compositions F et G, la présence des bulles dans les échantillons n'a pas permis l'obtention des résultats homogènes.

### Exemple 3

Dans cet exemple, chaque composition (A à H) a été enduite sur une surface (25 mm x 12 mm) d'un substrat en polypropylène ayant des dimensions de 100 mm x 25 mm x 5 mm. Un deuxième substrat du même type est ensuite mis en contact avec le substrat comprenant la composition bi-composante de sorte à coller les deux substrats entre eux. Les deux substrats sont maintenus l'un contre l'autre avec des pinces pendant 14 jours. La résistance au cisaillement des articles fabriqués est ensuite testée en utilisant un dynamomètre à une vitesse de 10 mm/min. Les valeurs obtenues correspondent à une moyenne de 3 mesures. La résistance au cisaillement est reportée avec le mode de défaillance.

Les résultats sont affichés dans le tableau ci-dessous.

**[Tableau 5]**

| Compositions | Résistance au cisaillement (MPa) | Mode de défaillance |
|---|---|---|
| A | 1,1 | RA/RC |
| B | 1,3 | RA/RC |
| C | 0,8 | RA |
| D | 0,8 | RA |
| E | 1,1 | RA/RC |
| F | 0,5 | RA |
| G | 1,1 | RA/RC |
| H | 2,5 | RC |

| | | |
|---|---|---|
| RC = rupture cohésive RA = rupture adhésive | | |

On constate que malgré une résistance au cisaillement légèrement inférieure à celle obtenue pour la composition H, les articles fabriqués à partir des compositions A à G, présentent des bonnes propriétés adhésives.

## Revendications

1. Composition bi-composante comprenant :
- une partie A comprenant un complexe de borane BH3 avec une amine ;
- une partie B comprenant un agent décomplexant pour décomplexer le borane et l'amine ; et
au moins un composé polymérisable par voie radicalaire comprenant au moins une liaison éthylénique, ce composé étant présent dans au moins une des parties A et B.

2. Composition selon la revendication 1, dans laquelle :
- l'amine est de formule (I) : 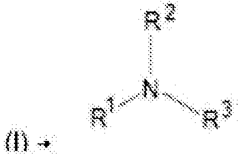 dans laquelle R1, R2 et R3 représentent indépendamment un atome d'hydrogène ou un groupement comprenant de 1 à 20 atomes de carbone, le groupement étant linéaire ou ramifié, saturé ou insaturé et étant choisi parmi un groupement alkyle, un groupement cycloalkyle, ou un groupement aryle ;
- ou l'amine est de formule (II) : 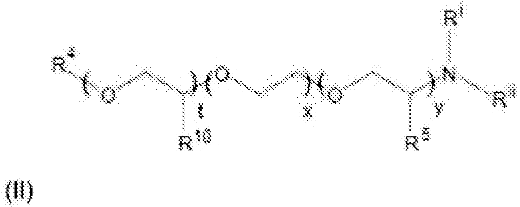 dans laquelle R⁴, R⁵ et R¹⁰ représentent indépendamment un atome d'hydrogène et un groupement comprenant de 1 à 10 atomes de carbone, le groupement étant linéaire ou ramifié, saturé ou insaturé et étant choisi parmi un groupement alkyle, un groupement cycloalkyle, ou un groupement aryle, Rⁱ et Rⁱⁱ représentent indépendamment un atome d'hydrogène ou un groupement comprenant de 1 à 20 atomes de carbone, saturé ou insaturé, le groupement étant linéaire ou ramifié et étant choisi parmi un groupement alkyle, un groupement cycloalkyle, un groupement aryle, ou un groupement arylalkyle, et t, x et y représentent indépendamment un nombre de 0 à 90 préférentiellement de 0 à 70, préférentiellement de 0 à 50 et encore plus préférentiellement de 0 à 30;
- ou l'amine est de formule (III) : 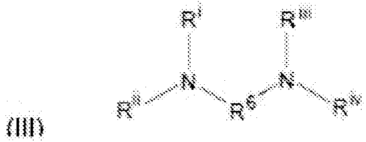 dans laquelle R⁶ représente un groupement divalent comprenant de 2 à 60 atomes de carbone, et de préférence de 2 à 40 atomes de carbone, le groupement étant linéaire ou ramifié, saturé ou insaturé, et étant choisi parmi un radical divalent alkyle, un radical divalent cycloalkyle, un radical divalent arylalkyle, ou un radical divalent aryle, et Rⁱ, Rⁱⁱ, Rⁱⁱⁱ et R^{iv} représentent indépendamment un atome d'hydrogène ou un groupement comprenant de 1 à 20 atomes de carbone, le groupement étant linéaire ou ramifié, saturé ou insaturé, et étant choisi parmi un groupement alkyle, un groupement cycloalkyle, un groupement aryle, ou un groupement arylalkyle ;
- ou l'amine est de formule (IV) : 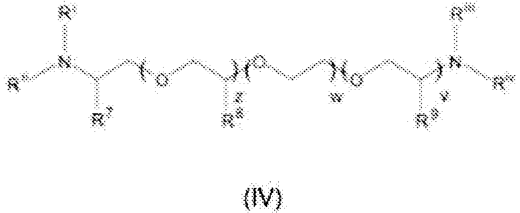 dans laquelle R⁷, R⁸ et R⁹ représentent indépendamment un groupement comprenant de 1 à 10 atomes de carbone, le groupement étant linéaire ou ramifié, saturé ou insaturé, et étant choisi parmi un groupement alkyle, un groupement cycloalkyle, ou un groupement aryle, Rⁱ, Rⁱⁱ, Rⁱⁱⁱ et R^{iv} représentent indépendamment un atome d'hydrogène ou un groupement comprenant de 1 à 20 atomes de carbone, le groupement étant linéaire ou ramifié, saturé ou insaturé, et étant choisi parmi un groupement alkyle, un groupement cycloalkyle, un groupement aryle, ou un groupement arylalkyle, et v, w et z représentent indépendamment un nombre de 0 à 90 et encore plus préférentiellement de 0 à 70 ;
- ou l'amine est de formule (V) : 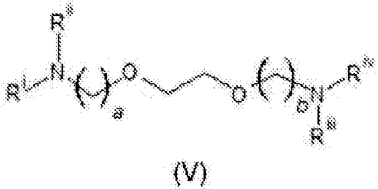 dans laquelle Rⁱ, Rⁱⁱ, Rⁱⁱⁱ et R^{iv} représentent indépendamment un atome d'hydrogène ou un groupement comprenant de 1 à 20 atomes de carbone, le groupement étant linéaire ou ramifié, saturé ou insaturé, et étant choisi parmi un groupement alkyle, un groupement cycloalkyle, un groupement aryle, ou un groupement arylalkyle ; a et b représentent indépendamment un nombre de 1 à 20 et de préférence de 2 à 11 ;
- ou l'amine est de formule (VI) : 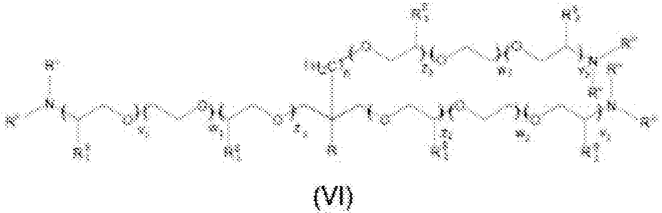 dans laquelle R₁⁸, R₁⁹, R₂⁸, R₂⁹, R₂⁹, R₃⁸, et R₃⁹ représentent indépendamment un groupement comprenant de 1 à 10 atomes de carbone, le groupement étant linéaire ou ramifié et étant choisi parmi un groupement alkyle, un groupement cycloalkyle, ou un groupement aryle, R représente un atome d'hydrogène et un groupement comprenant de 1 à 10 atomes de carbone le groupement étant linéaire ou ramifié, saturé ou insaturé, et étant choisi parmi un groupement alkyle, un groupement cycloalkyle, un groupement arylalkyle, ou un groupement aryle, Rⁱ, Rⁱⁱ, Rⁱⁱⁱ et R^{iv} représentent indépendamment un atome d'hydrogène ou un groupement comprenant de 1 à 20 atomes de carbone, le groupement étant linéaire ou ramifié et étant choisi parmi un groupement alkyle, un groupement cycloalkyle, un groupement aryle, ou un groupement arylalkyle, n représente un nombre de 0 à 30 et de préférence égal à 0 ou 1 et les sommes z₁ + z₂ + z₃, v₁+ v₂ + v₃ et w₁ + w₂ + w₃ représentent indépendamment un nombre de 0 à 90, préférentiellement de 0 à 70, préférentiellement de 0 à 50 et encore plus préférentiellement de 0 à 30 ;
et dans laquelle l'amine est de préférence choisie parmi la diéthylamine, la triéthylamine, la diéthylaniline, la diisopropylamine, la tert butylamine, l'éthylènediamine, la 1,3-propanediamine, une polyétheramine, et les combinaisons de celles-ci.

3. Composition selon l'une des revendications 1 ou 2, dans laquelle l'agent décomplexant est choisi parmi un isocyanate, un acide de Lewis, un acide carboxylique, un acide minéral, un acide sulfonique, un acide phosphonique, un chlorure d'acyle, un anhydride, un aldéhyde, un composé 1,3 dicarbonylé, un époxyde et les combinaisons de ceux-ci, et de préférence l'agent décomplexant est un isocyanate.

4. Composition selon l'une des revendications 1 à 3, dans laquelle le composé polymérisable par voie radicalaire est choisi parmi un monomère styrénique, vinylique, acrylique, méthacrylique et les combinaisons de ceux-ci, et de préférence le composé polymérisable par voie radicalaire est choisi parmi un acrylate, un acide acrylique, un acrylamide, un acrylonitrile, un méthacrylate, un acide méthacrylique, un méthacrylamide, un méthacrylonitrile et les combinaisons de ceux-ci.

5. Composition selon l'une des revendications 1 à 4, dans laquelle le composé polymérisable par voie radicalaire est présent uniquement dans la partie B de la composition, ou le composé polymérisable par voie radicalaire est présent uniquement dans la partie A de la composition, ou le composé polymérisable par voie radicalaire est présent dans la partie A et dans la partie B de la composition.

6. Composition selon l'une des revendications 1 à 5, dans laquelle le composé polymérisable par voie radicalaire a une teneur massique de 10 à 70 %, et de préférence de 10 à 60 % par rapport au total des parties A et B de la composition.

7. Composition selon l'une des revendications 1 à 6, dans laquelle le rapport massique de la partie A sur la partie B est de 0,05 à 20, de préférence de 0,1 à 10, et encore de préférence de 0,1 à 1.

8. Composition selon l'une des revendications 1 à 7, dans laquelle le complexe de borane BH₃ avec une amine est présent dans la partie A à une teneur massique de 0,1 à 100 %, de préférence de 1 à 50 %, et encore de préférence de 1 à 25 % par rapport au total de la partie A.

9. Composition selon l'une des revendications 1 à 8, dans laquelle l'agent décomplexant est présent dans la partie B à une teneur massique de 0,1 à 70 %, et de préférence de 5 à 60 % par rapport au total de la partie B.

10. Utilisation de la composition selon l'une des revendications 1 à 9, comme adhésif pour lier deux substrats entre eux, ou comme revêtement sur la surface d'un substrat, ou comme primaire sur la surface d'un substrat.

11. Utilisation selon la revendication 10, dans laquelle le substrat ou au moins l'un des deux substrats a une énergie de surface inférieure ou égale à 45 mJ/m², de préférence inférieure ou égale à 40 mJ/m², et encore de préférence inférieure ou égale à 35 mJ/m².

12. Article comprenant au moins une couche obtenue par réticulation de la composition selon l'une des revendications 1 à 9.

13. Article selon la revendication 12, dans lequel la couche est une couche adhésive.

14. Procédé de préparation de l'article selon l'une des revendications 12 ou 13, comprenant :
- le mélange de la partie A avec la partie B de la composition ; et
- l'enduction de ce mélange sur la surface d'un substrat ;
- optionnellement la mise en contact de cette surface avec la surface d'un substrat additionnel.

15. Procédé de préparation de l'article selon l'une des revendications 12 ou 13, comprenant :
- l'enduction d'une des parties A ou B de la composition sur la surface d'un substrat ; et
- l'enduction de la deuxième des parties A ou B de la composition sur la surface du substrat ;
- optionnellement la mise en contact de cette surface avec la surface d'un substrat additionnel.

## Patentansprüche

1. Zweikomponentige Zusammensetzung, umfassend:
- einen Teil A, der einen Komplex von Boran BH₃ mit einem Amin umfasst;
- einen Teil B, der ein Dekomplexierungsmittel zur Dekomplexierung des Borans und des Amins umfasst; und
mindestens eine radikalisch polymerisierbare Verbindung mit mindestens einer ethylenischen Bindung, wobei diese Verbindung in mindestens einem der Teile A und B vorliegt.

2. Zusammensetzung nach Anspruch 1, wobei:
- das Amin die Formel (I) aufweist: 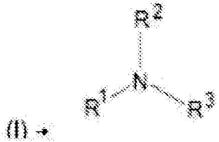 wobei R1, R2 und R3 unabhängig für ein Wasserstoffatom oder eine Gruppe mit 1 bis 20 Kohlenstoffatomen stehen, wobei die Gruppe linear oder verzweigt und gesättigt oder ungesättigt ist und aus einer Alkylgruppe, einer Cycloalkylgruppe oder einer Arylgruppe ausgewählt ist;
- oder das Amin die Formel (II) aufweist: 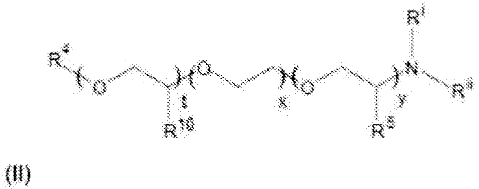 wobei R⁴, R⁵ und R¹⁰ unabhängig für ein Wasserstoffatom oder eine Gruppe mit 1 bis 10 Kohlenstoffatomen stehen, wobei die Gruppe linear oder verzweigt und gesättigt oder ungesättigt ist und aus einer Alkylgruppe, einer Cycloalkylgruppe oder einer Arylgruppe ausgewählt ist, Rⁱ und Rⁱⁱ unabhängig für ein Wasserstoffatom oder eine Gruppe mit 1 bis 20 Kohlenstoffatomen stehen, wobei die Gruppe linear oder verzweigt und gesättigt oder ungesättigt ist und aus einer Alkylgruppe, einer Cycloalkylgruppe, einer Arylgruppe oder einer Arylalkylgruppe ausgewählt ist, und t, x und y unabhängig für eine Zahl von 0 bis 90, bevorzugt 0 bis 70, bevorzugt 0 bis 50 und noch weiter bevorzugt 0 bis 30 stehen;
- oder das Amin die Formel (III) aufweist: 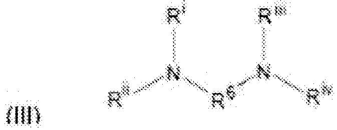 wobei R⁶ für eine zweiwertige Gruppe mit 2 bis 60 Kohlenstoffatomen und vorzugsweise 2 bis 40 Kohlenstoffatomen steht, wobei die Gruppe linear oder verzweigt und gesättigt oder ungesättigt ist und aus einem zweiwertigen Alkylrest, einem zweiwertigen Cycloalkylrest, einem zweiwertigen Arylalkylrest oder einem zweiwertigen Arylrest ausgewählt ist, und Rⁱ, Rⁱⁱ, Rⁱⁱⁱ und R^{iv} unabhängig für ein Wasserstoffatom oder eine Gruppe mit 1 bis 20 Kohlenstoffatomen stehen, wobei die Gruppe linear oder verzweigt und gesättigt oder ungesättigt ist und aus einer Alkylgruppe, einer Cycloalkylgruppe, einer Arylgruppe oder einer Arylalkylgruppe ausgewählt ist;
- oder das Amin die Formel (IV) aufweist: 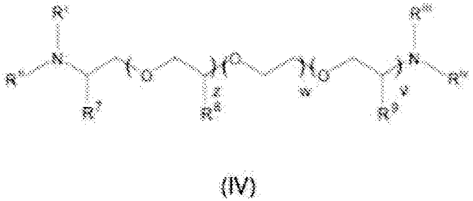 wobei R⁷, R⁸ und R⁹ unabhängig für eine Gruppe mit 1 bis 10 Kohlenstoffatomen stehen, wobei die Gruppe linear oder verzweigt und gesättigt oder ungesättigt ist und aus einer Alkylgruppe, einer Cycloalkylgruppe oder einer Arylgruppe ausgewählt ist, Rⁱ, Rⁱⁱ, Rⁱⁱⁱ und R^{iv} unabhängig für ein Wasserstoffatom oder eine Gruppe mit 1 bis 20 Kohlenstoffatomen stehen, wobei die Gruppe linear oder verzweigt und gesättigt oder ungesättigt ist und aus einer Alkylgruppe, einer Cycloalkylgruppe, einer Arylgruppe oder einer Arylalkylgruppe ausgewählt ist, und v, w und z unabhängig für eine Zahl von 0 bis 90 und noch weiter bevorzugt von 0 bis 70 stehen;
- oder das Amin die Formel (V) aufweist: 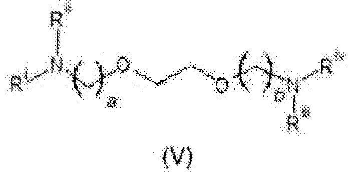 wobei Rⁱ, Rⁱⁱ, Rⁱⁱⁱ und R^{iv} unabhängig für ein Wasserstoffatom oder eine Gruppe mit 1 bis 20 Kohlenstoffatomen stehen, wobei die Gruppe linear oder verzweigt und gesättigt oder ungesättigt ist und aus einer Alkylgruppe, einer Cycloalkylgruppe, einer Arylgruppe oder einer Arylalkylgruppe ausgewählt ist; a und b unabhängig für eine Zahl von 1 bis 20 und vorzugsweise von 2 bis 11 stehen;
- oder das Amin die Formel (VI) aufweist: 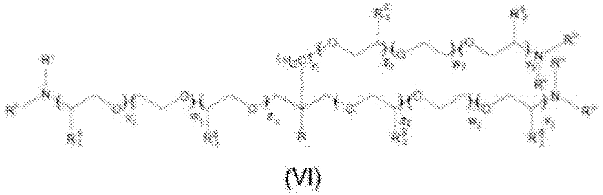 wobei R₁⁸, R₁⁹, R₂⁸, R₂⁹, R₂⁹, R₃⁸ und R₃⁹ unabhängig für eine Gruppe mit 1 bis 10 Kohlenstoffatomen stehen, wobei die Gruppe linear oder verzweigt ist und aus einer Alkylgruppe, einer Cycloalkylgruppe oder einer Arylgruppe ausgewählt ist, R für ein Wasserstoffatom oder eine Gruppe mit 1 bis 10 Kohlenstoffatomen steht, wobei die Gruppe linear oder verzweigt und gesättigt oder ungesättigt ist und aus einer Alkylgruppe, einer Cycloalkylgruppe, einer Arylalkylgruppe oder einer Arylgruppe ausgewählt ist, Rⁱ, Rⁱⁱ, Rⁱⁱⁱ und R^{iv} unabhängig für ein Wasserstoffatom oder eine Gruppe mit 1 bis 20 Kohlenstoffatomen stehen, wobei die Gruppe linear oder verzweigt ist und aus einer Alkylgruppe, einer Cycloalkylgruppe, einer Arylgruppe oder einer Arylalkylgruppe ausgewählt ist, n für eine Zahl von 0 bis 30 und vorzugsweise gleich 0 oder 1 steht und die Summen z₁ + z₂ + z₃, v₁ + v₂ + v₃ und w₁ + w₂ + w₃ unabhängig für eine Zahl von 0 bis 90, bevorzugt von 0 bis 70, bevorzugt von 0 bis 50 und noch weiter bevorzugt von 0 bis 30 stehen;
und wobei das Amin vorzugsweise aus Diethylamin, Triethylamin, Diethylanilin, Diisopropylamin, tert-Butylamin, Ethylendiamin, 1,3-Propandiamin, einem Polyetheramin und Kombinationen davon ausgewählt ist.

3. Zusammensetzung nach einem der Ansprüche 1 oder 2, wobei das Dekomplexierungsmittel aus einem Isocyanat, einer Lewis-Säure, einer Carbonsäure, einer Mineralsäure, einer Sulfonsäure, einer Phosphonsäure, einem Acylchlorid, einem Anhydrid, einem Aldehyd, einer 1,3-Dicarbonylverbindung, einem Epoxid und Kombinationen davon ausgewählt ist und es sich bei dem Dekomplexierungsmittel vorzugsweise um ein Isocyanat handelt.

4. Zusammensetzung nach einem der Ansprüche 1 bis 3, wobei die radikalisch polymerisierbare Verbindung aus einem Styrol-, Vinyl-, Acryl- oder Methacryl-Monomer und Kombinationen davon ausgewählt ist und die radikalisch polymerisierbare Verbindung vorzugsweise aus einem Acrylat, einer Acrylsäure, einem Acrylamid, einem Acrylnitril, einem Methacrylat, einer Methacrylsäure, einem Methacrylamid, einem Methacrylnitril und Kombinationen davon ausgewählt ist.

5. Zusammensetzung nach einem der Ansprüche 1 bis 4, wobei die radikalisch polymerisierbare Verbindung nur in Teil B der Zusammensetzung vorliegt oder die radikalisch polymerisierbare Verbindung nur in Teil A der Zusammensetzung vorliegt oder die radikalisch polymerisierbare Verbindung in Teil A und in Teil B der Zusammensetzung vorliegt.

6. Zusammensetzung nach einem der Ansprüche 1 bis 5, wobei die radikalisch polymerisierbare Verbindung einen Massengehalt von 10 bis 70 % und vorzugsweise 10 bis 60 %, bezogen auf die Gesamtheit der Teile A und B der Zusammensetzung, aufweist.

7. Zusammensetzung nach einem der Ansprüche 1 bis 6, wobei das Massenverhältnis von Teil A zu Teil B 0,05 bis 20, vorzugsweise 0,1 bis 10 und weiter bevorzugt 0,1 bis 1 beträgt.

8. Zusammensetzung nach einem der Ansprüche 1 bis 7, wobei der Komplex von Boran BH₃ mit einem Amin in Teil A in einem Massengehalt von 0,1 bis 100 %, vorzugsweise 1 bis 50 % und weiter bevorzugt 1 bis 25 %, bezogen auf die Gesamtheit von Teil A, vorliegt.

9. Zusammensetzung nach einem der Ansprüche 1 bis 8, wobei das Dekomplexierungsmittel in Teil B in einem Massengehalt von 0,1 bis 70 % und vorzugsweise 5 bis 60 %, bezogen auf die Gesamtheit von Teil B, vorliegt.

10. Verwendung der Zusammensetzung nach einem der Ansprüche 1 bis 9 als Klebstoff zum Verbinden von zwei Substraten miteinander oder als Beschichtung auf der Oberfläche eines Substrats oder als Grundierung auf der Oberfläche eines Substrats.

11. Verwendung nach Anspruch 10, wobei das Substrat bzw. mindestens eines der beiden Substrate eine Oberflächenenergie kleiner oder gleich 45 mJ/m², vorzugsweise kleiner oder gleich 40 mJ/m² und weiter bevorzugt kleiner oder gleich 35 mJ/m² aufweist.

12. Gegenstand, umfassend mindestens eine durch Vernetzung der Zusammensetzung nach einem der Ansprüche 1 bis 9 erhaltene Schicht.

13. Gegenstand nach Anspruch 12, wobei es sich bei der Schicht um eine Klebstoffschicht handelt.

14. Verfahren zur Herstellung des Gegenstands nach einem der Ansprüche 12 oder 13, umfassend:
- Mischen von Teil A mit Teil B der Zusammensetzung und
- Auftragen dieser Mischung auf die Oberfläche eines Substrats;
- gegebenenfalls Inkontaktbringen dieser Oberfläche mit der Oberfläche eines zusätzlichen Substrats.

15. Verfahren zur Herstellung des Gegenstands nach einem der Ansprüche 12 oder 13, umfassend:
- Auftragen eines der Teile A oder B der Zusammensetzung auf die Oberfläche eines Substrats und
- Auftragen des zweiten der Teile A oder B der Zusammensetzung auf die Oberfläche des Substrats;
- gegebenenfalls Inkontaktbringen dieser Oberfläche mit der Oberfläche eines zusätzlichen Substrats.

## Claims

1. A two-component composition comprising:
- a part A comprising a complex of borane BH₃ with an amine;
- a part B comprising a decomplexing agent for decomplexing the borane and the amine; and
at least one radically polymerizable compound comprising at least one ethylenic bond, this compound being present in at least one of parts A and B.

2. The composition as claimed in claim 1, wherein:
- the amine is of formula (I): 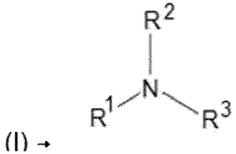 in which R¹, R² and R³ independently represent a hydrogen atom or a group comprising from 1 to 20 carbon atoms, the group being linear or branched and saturated or unsaturated and being chosen from an alkyl group, a cycloalkyl group, or an aryl group;
- or the amine is of formula (II): 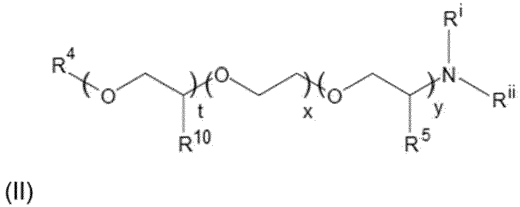 in which R⁴, R⁵ and R¹⁰ independently represent a hydrogen atom or a group comprising from 1 to 10 carbon atoms, the group being linear or branched and saturated or unsaturated and being chosen from an alkyl group, a cycloalkyl group, or an aryl group, Rⁱ and Rⁱⁱ independently represent a hydrogen atom or a saturated or unsaturated group comprising from 1 to 20 carbon atoms, the group being linear or branched and being chosen from an alkyl group, a cycloalkyl group, an aryl group, or an arylalkyl group, and t, x and y independently represent a number from 0 to 90, preferentially from 0 to 70, preferentially from 0 to 50, and even more preferentially from 0 to 30;
- or the amine is of formula (III): 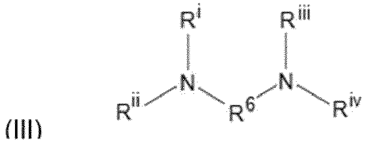 in which R⁶ represents a divalent group comprising from 2 to 60 carbon atoms, and preferably from 2 to 40 carbon atoms, the group being linear or branched and saturated or unsaturated and being chosen from a divalent alkyl radical, a divalent cycloalkyl radical, a divalent arylalkyl radical, or a divalent aryl radical, and Rⁱ, Rⁱⁱ, Rⁱⁱⁱ and R^{iv} independently represent a hydrogen atom or a group comprising from 1 to 20 carbon atoms, the group being linear or branched and saturated or unsaturated and being chosen from an alkyl group, a cycloalkyl group, an aryl group, or an arylalkyl group;
- or the amine is of formula (IV): 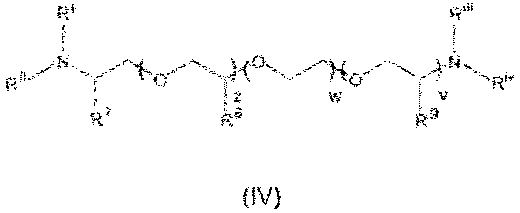 in which R⁷, R⁸ and R⁹ independently represent a group comprising from 1 to 10 carbon atoms, the group being linear or branched and saturated or unsaturated and being chosen from an alkyl group, a cycloalkyl group, or an aryl group, Rⁱ, Rⁱⁱ, Rⁱⁱⁱ and R^{iv} independently represent a hydrogen atom or a group comprising from 1 to 20 carbon atoms, the group being linear or branched and saturated or unsaturated and being chosen from an alkyl group, a cycloalkyl group, an aryl group, or an arylalkyl group, and v, w and z independently represent a number from 0 to 90 and even more preferentially from 0 to 70;
- or the amine is of formula (V): 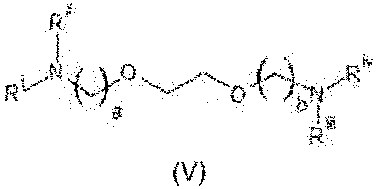 in which Rⁱ, Rⁱⁱ, Rⁱⁱⁱ and R^{iv} independently represent a hydrogen atom or a group comprising from 1 to 20 carbon atoms, the group being linear or branched and saturated or unsaturated and being chosen from an alkyl group, a cycloalkyl group, an aryl group, or an arylalkyl group; a and b independently represent a number from 1 to 20 and preferably from 2 to 11;
- or the amine is of formula (VI): 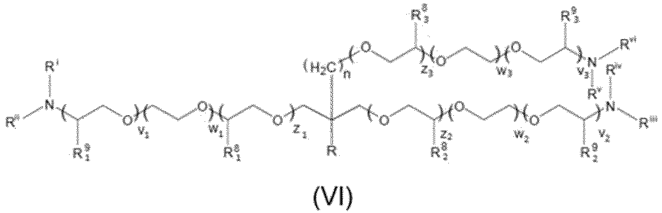 in which R₁⁸, R₁⁹, R₂⁸, R₂⁹, R₂⁹, R₃⁸, and R₃⁹ independently represent a group comprising from 1 to 10 carbon atoms, the group being linear or branched and being chosen from an alkyl group, a cycloalkyl group, or an aryl group, R represents a hydrogen atom or a group comprising from 1 to 10 carbon atoms, the group being linear or branched and saturated or unsaturated and being chosen from an alkyl group, a cycloalkyl group, an arylalkyl group, or an aryl group, Rⁱ, Rⁱⁱ, Rⁱⁱⁱ and R^{iv} independently represent a hydrogen atom or a group comprising from 1 to 20 carbon atoms, the group being linear or branched and being chosen from an alkyl group, a cycloalkyl group, an aryl group, or an arylalkyl group, n represents a number from 0 to 30 and preferably equal to 0 or 1 and the sums z₁ + z₂ + z₃, v₁ + v₂ + v₃ and w₁ + w₂ + w₃ independently represent a number from 0 to 90, preferentially from 0 to 70, preferentially from 0 to 50 and even more preferentially from 0 to 30;
and wherein the amine is preferably chosen from diethylamine, triethylamine, diethylaniline, diisopropylamine, tert-butylamine, ethylenediamine, 1,3-propanediamine, a polyetheramine, and combinations thereof.

3. The composition as claimed in either of claims 1 and 2, wherein the decomplexing agent is chosen from an isocyanate, a Lewis acid, a carboxylic acid, a mineral acid, a sulfonic acid, a phosphonic acid, an acyl chloride, an anhydride, an aldehyde, a 1,3-dicarbonyl compound, an epoxide, and combinations thereof, and preferably the decomplexing agent is an isocyanate.

4. The composition as claimed in one of claims 1 to 3, wherein the radically polymerizable compound is chosen from a styrene, vinyl, acrylic, or methacrylic monomer, and combinations thereof, and preferably the radically polymerizable compound is chosen from an acrylate, an acrylic acid, an acrylamide, an acrylonitrile, a methacrylate, a methacrylic acid, a methacrylamide, a methacrylonitrile, and combinations thereof.

5. The composition as claimed in one of claims 1 to 4, wherein the radically polymerizable compound is present only in part B of the composition, or the radically polymerizable compound is present only in part A of the composition, or the radically polymerizable compound is present in part A and in part B of the composition.

6. The composition as claimed in one of claims 1 to 5, wherein the radically polymerizable compound has a content by mass of 10% to 70%, and preferably of 10% to 60%, relative to the total of parts A and B of the composition.

7. The composition as claimed in one of claims 1 to 6, wherein the mass ratio of part A to part B is from 0.05 to 20, preferably from 0.1 to 10, and more preferably from 0.1 to 1.

8. The composition as claimed in one of claims 1 to 7, wherein the complex of borane BH₃ with an amine is present in part A at a content by mass of 0.1% to 100%, preferably of 1% to 50%, and more preferably of 1% to 25%, relative to the total of part A.

9. The composition as claimed in one of claims 1 to 8, wherein the decomplexing agent is present in part B at a content by mass of 0.1% to 70% and preferably of 5% to 60%, relative to the total of part B.

10. The use of the composition as claimed in one of claims 1 to 9 as an adhesive for binding two substrates together, or as a coating on the surface of a substrate, or as a primer on the surface of a substrate.

11. The use as claimed in claim 10, wherein the substrate or at least one of the two substrates has a surface energy of less than or equal to 45 mJ/m², preferably of less than or equal to 40 mJ/m², and more preferably of less than or equal to 35 mJ/m².

12. An article comprising at least one layer obtained by crosslinking the composition as claimed in one of claims 1 to 9.

13. The article as claimed in claim 12, wherein the layer is an adhesive layer.

14. A method for preparing the article according to either of claims 12 and 13, comprising:
- mixing part A with part B of the composition; and
- coating this mixture on the surface of a substrate;
- optionally bringing this surface into contact with the surface of an additional substrate.

15. A method for preparing the article according to either of claims 12 and 13, comprising:
- coating one of parts A or B of the composition on the surface of a substrate; and
- coating the second of parts A or B of the composition on the surface of the substrate;
- optionally bringing this surface into contact with the surface of an additional substrate.
